## Europäisches Patentamt
## European Patent Office
## Office européen des brevets

(19)

(11) Numéro de publication : **0 227 694**
**B1**

(12) # FASCICULE DE BREVET EUROPÉEN

(45) Date de publication du fascicule du brevet :
09.11.88

(51) Int. Cl.⁴ : **B 60 N  1/02**, B 60 N  1/08,
F 16 H  1/16

(21) Numéro de dépôt : 86902418.2

(22) Date de dépôt : 14.04.86

(86) Numéro de dépôt international :
PCT/FR 86/00122

(87) Numéro de publication internationale :
WO/8606036 (23.10.86 Gazette 86/23)

(54) **DISPOSITIF DE COMMANDE DU DEPLACEMENT D'UN ELEMENT, NOTAMMENT D'UN SIEGE OU DES PARTIES D'UN SIEGE D'UN VEHICULE AUTOMOBILE, PAR RAPPORT A UN BATI.**

(30) Priorité : 18.04.85 FR 8505879

(43) Date de publication de la demande :
08.07.87 Bulletin 87/28

(45) Mention de la délivrance du brevet :
09.11.88 Bulletin 88/45

(84) Etats contractants désignés :
DE FR GB IT SE

(56) Documents cités :
DE-A- 1 755 740
DE-C-   135 434
FR-A- 1 105 315
GB-A- 2 072 881
US-A- 2 173 660
US-A- 3 617 021

(73) Titulaire : EQUIPEMENTS AUTOMOBILES MARCHAL
21-27 boulevard Gambetta
F-92130 Issy les Moulineaux (FR)

(72) Inventeur : HAMELIN, René-Louis
22, rue de la Gambauderie
F-91190 Gif sur Yvette (FR)
Inventeur : WATTIER, Maurice Rue Verte
Dizy-le-Gros
F-02150 Sissonnes (FR)

(74) Mandataire : Michardière, Bernard et al
C/O CABINET PEUSCET 68, rue d'Hauteville
F-75010 Paris (FR)

EP 0 227 694 B1

## Description

L'invention est relative à un dispositif de commande du déplacement d'un élément par rapport à un bâti, dispositif du genre de ceux qui comprennent un moteur, ayant un arbre muni à une extrémité d'une vis sans fin, ou équivalent, propre à entraîner une roue-écrou dont l'axe est orthogonal à la direction de l'arbre du moteur, l'ensemble de la vis sans fin et de la roue-écrou appartenant à un réducteur, tandis qu'une vis, ou analogue, coopère avec l'écrou de la roue-écrou, des moyens de guidage du déplacement étant en outre prévus entre le bâti et l'élément.

L'invention concerne plus particulièrement, parce que c'est dans ce cas que son application semble devoir présenter le plus d'intérêt, mais non exclusivement, un dispositif de commande des déplacements d'éléments d'un véhicule automobile, en particulier d'un siège de ce véhicule.

De nombreuses solutions ont été proposées jusqu'à ce jour pour une telle commande. Toutefois, la transmission du mouvement de rotation entre l'arbre du moteur et la roue-écrou pose des problèmes. On souhaite, en particulier, que le réducteur comprenant la vis sans fin et la roue-écrou soit d'un encombrement réduit et d'un montage simple et rapide. On souhaite, en outre, pouvoir compenser des fluctuations, inhérentes à toute fabrication, des positions géométriques relatives des pièces du dispositif.

Dans la suite du texte, on utilisera indifféremment le terme roue-écrou ou tout simplement roue (par souci de simplification) pour désigner le même élément.

Les dispositifs du genre défini précédemment présentent l'avantage de l'immobilité en rotation autour de son axe de la vis par rapport à l'élément à déplacer, ce qui simplifie le montage de la vis. En outre, la transmission des efforts entre la roue-écrou et la vis, engagée dans l'écrou, s'effectue dans de bonnes conditions sur toute la périphérie de la vis.

L'invention a pour but, surtout, de rendre les dispositifs du genre défini précédemment tels qu'ils répondent mieux que jusqu'à présent aux diverses exigences de la pratique et notamment tels que le réducteur soit d'un encombrement réduit et d'un montage simple et rapide. De préférence, l'invention vise à permettre d'absorber des fluctuations, liées aux tolérances de fabrication, dans les positions géométriques relatives des différentes pièces du dispositif, notamment entre l'élément et le moteur, au cours du déplacement dudit élément.

Selon l'invention, un dispositif de commande du déplacement d'un élément par rapport à un bâti, du genre défini précédemment, est caractérisé par le fait que le réducteur comprend un étrier comportant deux manchons cylindriques sécants, orthogonaux, les volumes intérieurs de ces manchons communiquant par une ouverture correspondant à leur intersection, l'un de ces manchons étant propre à recevoir la roue-écrou, tandis que la vis sans fin est logée dans un tube, lié au carter du moteur, qui comporte sur sa paroi cylindrique, à une extrémité destinée à être engagée dans le deuxième manchon de l'étrier, une fenêtre correspondant à l'intersection des manchons, de sorte que, pour le montage du réducteur, la susdite extrémité du tube est enfilée dans ledit deuxième manchon de l'étrier afin que la susdite fenêtre vienne en regard de la susdite ouverture et que des filets de la vis sans fin faisant saillie à travers ladite fenêtre puissent engrener avec la roue-écrou, laquelle est enfilée dans le premier manchon qui est monté entre deux branches qui comportent des trous pour le passage de la vis.

Dans le cas d'un élément guidé par deux glissières sensiblement parallèles, écartées transversalement l'une de l'autre, le moteur est disposé entre ces deux glissières et comporte deux sorties d'arbre orientées sensiblement orthogonalement aux glissières, le moteur étant situé plus près d'une glissière que de l'autre, et le tube, de plus courte longueur, situé entre le moteur et la glissière la plus proche, est solidaire du carter du moteur.

Les deux branches entre lesquelles est monté le manchon de l'étrier, destiné à recevoir la roue-écrou, sont, de préférence, les deux branches d'une chape fixée sur l'une des deux parties constituées par l'élément à déplacer et le bâti, ou fixée sur un organe lié à l'une de ces deux parties.

Des coupelles peuvent être engagées sur la roue, à chaque extrémité du manchon, avec un léger serrage, ces coupelles servant de palier à la roue.

La roue peut être en matière plastique dure, tandis que les coupelles sont métalliques.

Avantageusement, la vis est immobilisée en rotation autour de son axe.

La vis, ou équivalent, destinée à être engagée dans l'écrou de la roue-écrou, peut être montée avec une possibilité de débattement au moins suivant une direction sensiblement parallèle à celle de l'arbre moteur.

Dans ces conditions, si l'élément à déplacer, au cours de son mouvement, s'écarte de sa trajectoire théorique du fait des tolérances de fabrication, le débattement possible de la vis permet le rattrapage des imperfections inhérentes à toute fabrication.

Avantageusement, la partie de l'arbre d'entraînement du moteur s'étendant entre le moteur et la vis sans fin est rigide et a une longueur déterminée par le montage.

Dans le cas de la commande du déplacement en translation d'un élément guidé par une glissière suivant une direction rectiligne, la vis étant orientée parallèlement à la direction de déplacement, avantageusement selon l'invention, cette vis est montée sur l'élément de manière à pouvoir se déplacer parallèlement à elle-même suivant une direction sensiblement orthogonale à celle de l'axe de la vis.

De préférence, la vis est solidaire d'un volet monté sur une partie dudit élément avec une possibilité de débattement angulaire autour d'un axe longitudinal parallèle à la vis, mais écarté de cette dernière.

La vis peut être liée à l'élément à déplacer auquel cas le carter du moteur reste immobile par rapport au bâti. En variante, la vis peut être liée au bâti, et donc rester immobile, tandis que le carter du moteur, qui se déplace, est lié au susdit élément à déplacer.

Généralement, l'élément à déplacer en translation est guidé par deux glissières sensiblement parallèles, écartées transversalement l'une de l'autre, ledit élément comportant des coulisseaux engagés sur chaque glissière ; le moteur est disposé entre ces deux glissières et comporte deux sorties d'arbre orientées sensiblement orthogonalement aux glissières ; une vis liée à l'élément est associée à chaque coulisseau tandis que l'extrémité voisine de la partie d'arbre correspondant est équipée d'une vis sans fin propre à coopérer avec une roue-écrou associée à chaque vis ; dans ce cas, chaque partie d'arbre moteur s'étendant entre le moteur et la roue-écrou associée est rigide et a une longueur déterminée, tandis que chaque vis est montée sur un coulisseau associé à une glissière, avec une possibilité de débattement suivant une direction parallèle à celle de l'arbre moteur.

Le dispositif de l'invention peut également servir à la commande du déplacement en rotation d'un élément autour d'un pivot qui constitue le moyen de guidage de cet élément par rapport au bâti ; dans ce cas, la vis engagée dans la roue-écrou est liée audit élément par une articulation autorisant un débattement angulaire suffisant de la vis dans un plan parallèle à l'arbre du moteur, la susdite roue-écrou et le moteur étant en outre montés avec une possibilité de rotation autour d'un axe parallèle au pivot.

Le dispositif de commande du déplacement en translation, défini précédemment, peut servir à commander les déplacements vers l'avant ou vers l'arrière d'un siège de véhicule automobile, ce siège étant muni sous sa partie inférieure, de coulisseaux propres à se déplacer dans deux glissières parallèles la vis associée à chaque glissière étant liée au coulisseau correspondant, avec la possibilité de débattement suivant une direction parallèle à celle de l'arbre moteur.

Le blocage en rotation de chaque vis par rapport au volet associé peut être assuré par la coopération d'une fente prévue à chaque extrémité de la vis dans laquelle est engagé le bord d'un évidement prévu dans le volet pour servir de logement à la vis.

Le volet peut être constitué par une tôle disposée de chant, maintenue contre la face interne d'un coulisseau, solidaire de l'élément, cette tôle présentant un organe d'articulation longitudinal, tel qu'une nervure, propre à coopérer avec un flanc du coulisseau.

Un tel dispositif de commande d'un déplacement en translation peut également être utilisé pour le réglage en hauteur et en site d'un siège de véhicule automobile. Dans ce cas, on prévoit, de préférence, à l'avant de siège, deux glissières verticales, une vis orientée verticalement étant associée à chaque glissière et étant liée au siège avec une possibilité de débattement suivant une direction orthogonale parallèle à celle de l'arbre du moteur.

Chaque volet portant une vis peut être équipé d'un carter recouvrant la vis.

Il est souhaitable, en outre, que la fixation de l'étrier sur un support lié à l'un des deux organes constitués par le bâti et l'élément à déplacer, soit satisfaisante, tant au point de vue de la rapidité d'assemblage que de la simplicité et de l'économie de fabrication d'un tel assemblage.

Selon un autre aspect, l'invention permet donc de réaliser d'une manière simple et rapide le montage et l'assemblage de l'étrier du réducteur sur un support lié à l'un des deux organes constitués par le bâti et l'élément à déplacer.

Selon cet aspect de l'invention, un dispositif de commande du déplacement d'un élément par rapport à un bâti, du genre défini précédemment, lequel dispositif comprend en outre des moyens de retenue de l'étrier par rapport à un support lié à l'un des deux organes constitués par le bâti et l'élément à déplacer, ainsi que des moyens de liaison démontables entre la vis qui coopère avec la roue et l'autre organe, est caractérisé par le fait que les susdits moyens de retenue comprennent une fenêtre, ou analogue, limitée par un cadre solidaire du support, cette fenêtre étant propre à recevoir une partie de l'étrier de sorte que le cadre de cette fenêtre entoure ladite partie pour s'opposer à un déplacement de l'étrier parallèlement à l'arbre du moteur, et que des moyens de liaison conjugués sont prévus sur l'étrier et le support pour entrer en coopération, lors du montage de l'étrier dans la fenêtre, afin d'empêcher un déplacement de l'étrier par rapport au support suivant une direction sensiblement orthogonale au plan moyen de la fenêtre, l'ensemble étant tel que le montage de l'étrier dans la fenêtre peut être effectué alors que la susdite vis n'est pas encore liée à l'autre organe, tandis que le démontage de l'étrier par rapport à la fenêtre se trouve empêché lorsque la susdite vis a été reliée à l'autre organe.

La fenêtre est généralement prévue de manière à recevoir celui des manchons de l'étrier qui est coaxial à l'arbre du moteur.

Avantageusement, la fenêtre est ménagée dans une patte solidaire du support. Cette patte peut avoir la forme d'un dièdre sensiblement à angle droit dont une face, qui comporte la susdite fenêtre, est sensiblement parallèle à l'arbre du moteur et à l'axe géométrique de la roue du réducteur, tandis que l'autre face du dièdre est légèrement écartée du support tout en étant reliée rigidement à ce dernier suivant son bord éloigné de l'arête du dièdre, les moyens de liaison conjugués, au niveau du support, étant prévus dans cette deuxième face du dièdre.

Dans le cas d'un dispositif pour un élément guidé par deux glissières sensiblement parallèles, la susdite patte est prévue sur la face intérieure de chaque glissière.

Les moyens de liaison conjugués de l'étrier et du support peuvent être constitués par l'ensemble d'un téton et d'un trou propre à recevoir ce téton lors du montage. Le téton peut être prévu sur l'étrier et faire saillie sensiblement parallèlement à la direction de l'arbre du moteur, tandis que le trou est prévu sur le support ou sur un élément solidaire de ce support, notamment dans la susdite face de la patte fixée sur le support.

On peut prévoir une pièce d'encadrement, à section transversale en U, présentant deux faces planes parallèles destinées à entourer les extrémités du manchon de l'étrier recevant la roue, ces faces comportant des trous pour le passage de la vis qui coopère avec la roue, tandis que la partie de la pièce d'encadrement qui assure la liaison entre les branches du U comporte une encoche ou équivalent propre à recevoir un tube de protection qui entoure l'arbre du moteur.

Les moyens de liaison démontables entre la vis, qui coopère avec la roue, et l'autre organe peuvent comprendre une tête munie d'un œil ou alésage, à une extrémité de la vis, et, du côté de l'organe, un axe destiné à être engagé dans le susdit œil. Un jeu radial suffisant est prévu entre le diamètre extérieur de l'axe et le diamètre intérieur de l'œil pour permettre les débattements nécessaires au fonctionnement. Cet œil est serré, suivant la direction de l'axe, entre une butée solidaire de cet axe et des moyens élastiques, notamment formés par une rondelle déformable pour rattrapage de jeu, prenant appui sur ledit axe, du côté opposé à la susdite butée.

Dans le cas où le dispositif de commande est destiné au déplacement d'un élément guidé par des glissières, le susdit organe portant l'axe coopérant avec l'œil de la vis est avantageusement constitué par un coulisseau mobile dans la glissière, l'axe étant porté par une pièce solidaire du coulisseau.

Dans le cas où le moteur du dispositif de commande comporte deux sorties d'arbre destinées à entraîner deux réducteurs prévus à chaque extrémité des arbres, le moteur est généralement situé plus près de l'un des réducteurs que de l'autre ; les deux arbres du moteur sont entourés par des tubes de protection ; le tube de plus courte longueur est généralement solidaire du carter du moteur, tandis que le tube de plus grande longueur est assemblé de manière démontable au carter du moteur. De préférence, ce tube de plus grande longueur est monté avec une possibilité de coulissement parallèlement à l'arbre du moteur suivant une amplitude limitée, des moyens élastiques étant prévus pour écarter ce tube du carter du moteur, notamment afin de rattraper les défauts d'écartement entre les organes à commander.

Le montage coulissant de ce tube peut être réalisé en prévoyant, à l'extrémité associée du carter du moteur, un manchon destiné à recevoir l'extrémité du tube et, sur cette extrémité du tube, une gorge destinée à coopérer avec un pion, notamment une vis, fixé sur le susdit manchon et traversant la paroi de ce dernier de manière à faire saillie dans la gorge du tube engagé dans le manchon. La longueur axiale de cette gorge détermine l'amplitude du débattement autorisé pour le tube suivant la direction axiale. Les moyens élastiques d'écartement du tube peuvent comprendre un ressort en hélice engagé autour du tube et prenant appui, d'un côté, contre l'extrémité du susdit manchon ou contre une butée solidaire du carter du moteur, et de l'autre côté contre une butée, notamment une bague, liée au tube.

L'invention consiste, mises à part les dispositions exposées ci-dessus en un certain nombre d'autres dispositions dont il sera plus explicitement question ci-après à propos de modes de réalisation particuliers décrits avec référence aux dessins ci-annexés, mais qui ne sont nullement limitatifs.

La figure 1, de ces dessins, est une vue schématique en coupe transversale verticale, avec parties en extérieur, d'un dispositif de commande, selon l'invention, pour le réglage de la position longitudinale d'un siège de véhicule automobile.

La figure 2 est une vue de gauche partielle d'un volet et de la vis associée suivant la flèche II figure 1, avec parties arrachées.

La figure 3 est une vue de dessus, par rapport à la figure 1, avec parties coupées.

La figure 4 est une représentation schématique d'un dispositif selon l'invention pour la commande d'un déplacement en rotation, en particulier pour la commande de l'inclinaison d'un dossier de siège.

La figure 5 est une vue en perspective éclatée d'une partie du dispositif et du réducteur.

La figure 6 est une vue en perspective éclatée de la fixation d'un volet sur un coulisseau.

Les figures 7 et 8 sont des schémas simplifiés de variantes de réalisation.

La figure 9 est une vue en perspective d'une variante du dispositif conforme à l'invention, en cours de montage.

La figure 10 est une vue en perspective, sous un autre angle, de certaines pièces du dispositif de la figure 9.

La figure 11, enfin, montre en perspective, sous le même angle que la figure 9, le dispositif de commande assemblé.

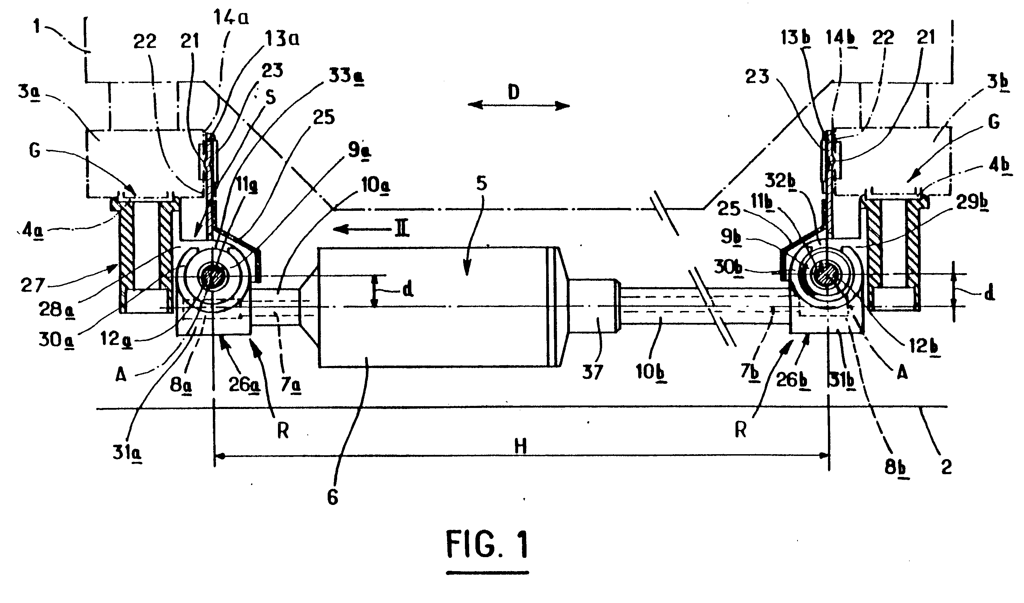

En se reportant aux dessins, notamment aux figures 1 à 3, on peut voir un dispositif de commande du déplacement d'un élément constitué par un siège 1, de véhicule automobile, schématiquement représenté. Le siège 1 peut être déplacé en translation, suivant une direction orthogonale au plan de la figure 1, par rapport à un bâti constitué par le plancher 2 du véhicule. Le siège 1 comporte, sous sa partie inférieure, de chaque côté, des coulisseaux 3a, 3b, propres à se déplacer sur des glissières 4a, 4b sensiblement parallèles, fixées sur le plancher 2.

Ces glissières 4a, 4b constituent des moyens de guidage G du siège 1.

Le dispositif de commande comprend un moteur 5 ayant un carter ou carcasse 6. L'axe du moteur est disposé orthogonalement, aux tolérances près, par rapport aux glissières 4a, 4b. Le moteur 5 est disposé entre les deux glissières et comporte deux sorties d'arbre 7a, 7b orientées sensiblement orthogonalement aux glissières. Chaque arbre tel que 7a est muni, à une extrémité, d'une vis sans fin telle que 8a, ou équivalent, propre à entraîner une roue-écrou associée 9a. Les arbres rotatifs 7a, 7b sont disposés à l'intérieur de tubes de protection 10a, 10b liés à la carcasse du moteur 5.

Ces arbres 7a, 7b sont rigides et ont une longueur déterminée par le montage.

Par roue-écrou 9a, on désigne une roue munie sur la surface extérieure d'une denture propre à coopérer avec la denture hélicoïdale de la vis sans fin 8a de sorte que la rotation de cette vis 8a provoque une rotation démultipliée de la roue 9a autour de l'axe A orthogonal à l'arbre 7a, cette roue-écrou 9a comportant, en outre, un alésage 11a taraudé propre à coopérer, à la manière d'un écrou, avec une vis 12a, ou organe équivalent, admettant A pour axe longitudinal.

Chaque vis telle que 12a est immobilisée en rotation autour de son axe A tout en étant liée à l'élément à déplacer 1 ; dans l'exemple envisagé, la vis 12a est liée au coulisseau 3a solidaire du siège formant l'élément à déplacer. Il est clair que les explications fournies au sujet de la vis 12a s'appliquent immédiatement aux autres vis telles que 12b ayant une fonction similaire ; dans ces conditions, la description donnée au sujet des pièces désignées par des chiffres de référence suivis de la lettre a ne sera pas reprise au sujet des pièces désignées par les mêmes références numériques suivies de la lettre b.

La vis 12a est montée sur le coulisseau 3a avec une possibilité de débattement au moins suivant une direction représentée par la double flèche D sur la figure 1, sensiblement parallèle à celle de l'arbre moteur 7a.

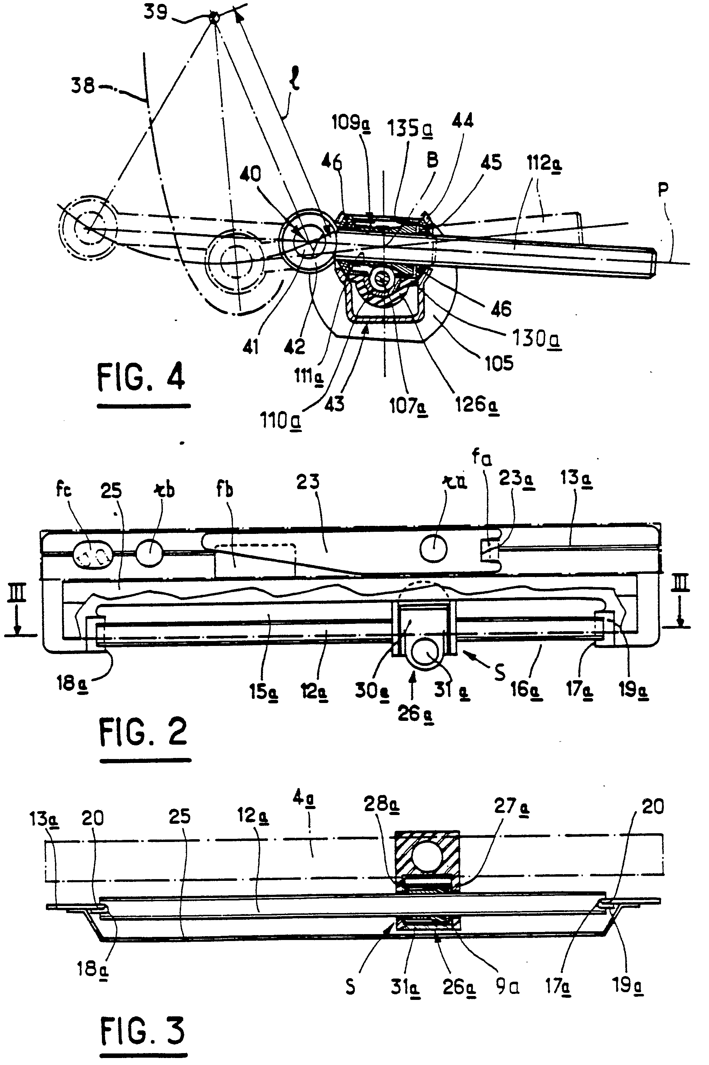

Comme visible d'après les figures 2 et 3, la vis 12a est solidaire d'un volet 13a maintenu contre la face interne 14a du coulisseau 3a. Le volet 13a est constitué par une tôle de forme rectangulaire allongée, ayant une longueur sensiblement égale à celle de la glissière 4a, disposée de chant. La partie inférieure du volet 13a comporte une échancrure longitudinale 15a (figure 2) de forme sensiblement rectangulaire dont l'ouverture 16a, s'étendant suivant l'un des grands côtés, débouche sur le bord longitudinal inférieur du volet 13a. Les petits bords transversaux 17a, 18a de l'échancrure 15a ont une épaisseur double de celle de la tôle formant le volet 13a, épaisseur obtenue par pliage à 180°, du côté opposé à l'échancrure 15a, de languettes telles que 19a (figure 3) qui ont été conservées lors de la découpe de l'échancrure 15a.

Chaque vis telle que 12a comporte, à ses extrémités longitudinales, des évidements parallèles tels que 20, s'étendant suivant un diamètre, propres à recevoir les bords transversaux 17a, 18a. L'engagement de ces bords dans les susdits évidements, est effectué avec un jeu suffisant pour laisser à la vis une possibilité de débattement suivant la direction des bords transversaux 17a, 18a, sensiblement orthogonale à l'axe A.

Le volet 13a présente un organe d'articulation constitué notamment par une nervure longitudinale 21 (figure 1) parallèle aux grands côtés du volet ; cette nervure 21, en saillie vers la face interne du coulisseau 3a est formée, par exemple, par un embouti longitudinal de la tôle constituant le volet. Cette nervure 21 coopère avec la face plane du flanc 22 du coulisseau 3a.

Le volet 13a est avantageusement agencé pour être monté et maintenu sur un coulisseau 3a d'un siège standard à commande manuelle. Autrement dit, le volet 13a est agencé pour n'exiger aucune transformation importante d'un coulisseau 3a existant, ce qui permet de monter facilement le dispositif sur un siège non prévu initialement pour un tel équipement.

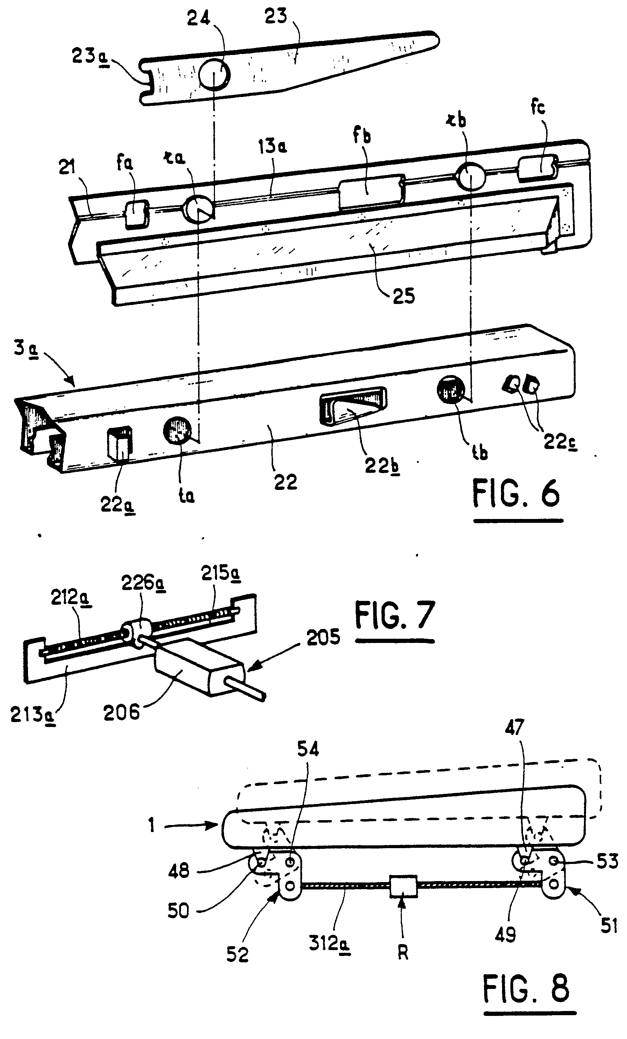

Par exemple, comme visible sur la figure 6, le flanc 22 peut comporter des languettes 22a, 22b, 22c obtenues par découpe et déformation de la tôle du flanc 22, notamment pour la mise en place du dispositif de verrouillage (non représenté) d'une commande manuelle.

Dans ces conditions, on prévoit dans le volet 13a des fenêtres fa, fb, fc dans lesquelles sont destinées à passer les languettes 22a, 22b, 22c, de sorte que la nervure 21 puisse venir en appui contre le flanc 22.

Deux pions ra, rb faisant saillie de chaque côté du volet 13a, centrés sur l'axe de la nervure 21 et situés vers les extrémités du volet 13a, sont prévus pour entrer dans des trous circulaires ta, tb du flanc 22. Les pions ra, rb sont reçus avec un jeu suffisant, dans ces trous ta, tb, pour permettre un débattement du volet 13a autour de la nervure 21.

Le volet 13a est maintenu contre le flanc 22 (avec les pions ra, rb engagés dans les trous ta, tb) par une clé 23 constituée par une plaquette dont une partie a une forme trapézoïdale et dont l'autre partie a une forme rectangulaire, comme visible sur les figures 2 et 6. Cette clé 23 est placée du côté du volet opposé au coulisseau 3a et coopère avec les languettes 22a, 22b (ou « crevés ») du flanc 22 du coulisseau.

La clé 23 comporte un trou 24 dans lequel est engagée la tête du pion ra. Comme visible sur les figures 2 et 4, l'extrémité de la clé 23, destinée à coopérer avec la languette 22a, à génératrices verticales, comporte une sorte d'encoche 23a dans laquelle s'engage la languette 22a pour empêcher la clé 23 de tourner autour du pion ra. La clé 23 est avantageusement constituée par une sorte de lame ressort dont la section transversale est en arc de cercle et tourne sa convexité du côté opposé au flanc 22.

Le volet 13a est ainsi maintenu serré contre la face interne du coulisseau 3a avec une possibilité de léger débattement angulaire autour de l'axe longitudinal, parallèle à A, déterminé par la coopération de la nervure 21 et du flanc 22.

Un carter 25 peut être fixé sur la partie inférieure du volet 13a, notamment par des points de soudure, pour recouvrir la vis 12a.

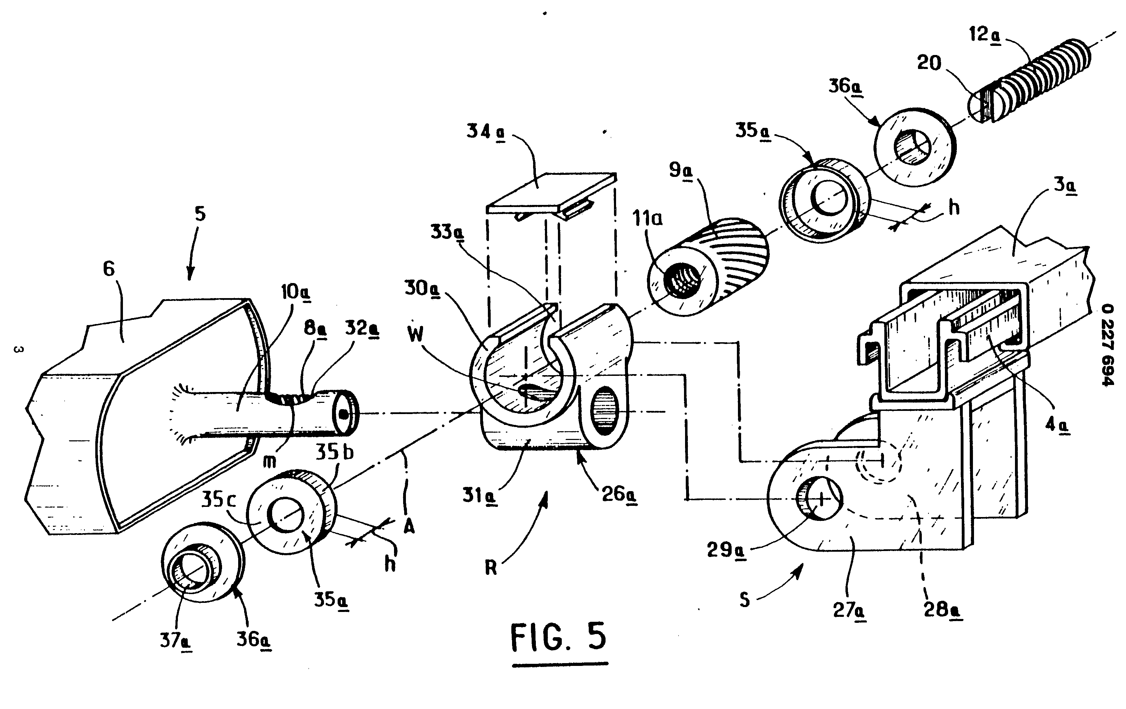

Le réducteur R, auquel appartiennent la roue-écrou 9a et la vis sans fin 8a (voir notamment figure 5) comprend un étrier 26a maintenu fixe par rapport à la glissière 4a à l'aide d'une chape S à deux branches 27a, 28a venant enserrer, suivant la direction de l'axe A, l'étrier 26a. La chape S est fixée sous la glissière 4a. Chaque branche 27a, 28a comporte un trou 29a pour le passage de la vis 12a.

L'étrier 26a est en une seule pièce (monobloc).

Cet étrier 26a comporte deux manchons cylindriques 30a, 31a sécants, dont les axes sont orthogonaux et décalés d'une distance d (figure 1). Les volumes intérieurs de ces manchons communiquent par une ouverture W (figure 5) correspondant à leur intersection.

Le manchon 30a est propre à recevoir la roue-écrou 9a. Le manchon 31a reçoit l'extrémité du tube 10a dans lequel est logé l'arbre 7a et la vis sans fin. A cette extrémité, comme bien visible sur la figure 5, le tube 10a comporte, sur sa paroi cylindrique, une fenêtre 32a correspondant à l'intersection des manchons 30a, 31a. Cette fenêtre 32a est limitée par l'intersection du tube 10a et d'une surface cylindrique orthogonale au tube, ayant même diamètre que le diamètre interne du manchon 30a et dont l'axe est situé à la distance d de l'axe de 30a. Le diamètre extérieur du tube 10a est égal, au jeu de coulissement près, au diamètre intérieur du manchon 31a. Des filets de la vis sans fin 8a font saillie à travers la fenêtre 32a. Lorsque l'extrémité du tube 10a est engagée dans le manchon 31a de sorte que la fenêtre 32a vienne en regard de l'ouverture W, les filets de la vis 8a font saillie également à travers cette ouverture W et peuvent engrener avec la roue-écrou 9a engagée dans le manchon 30a. Ce manchon 30a peut comporter, dans sa paroi, une fente longitudinale 33a située dans la partie haute, à l'opposé de l'ouverture W. Cette fente 33a s'étend, transversalement, suivant un arc de cercle et permet d'accéder à la denture extérieure de la roue 9a en particulier en vue de son graissage. Un couvercle 34a, en matière plastique, peut être prévu pour un clipsage dans cette fente 33a pour la fermer. Des coupelles 35a sont prévues pour être engagées à chaque extrémité du manchon 30a et venir coiffer chaque extrémité axiale de la roue 9a. Le diamètre extérieur de la roue-écrou 9a est égal au diamètre intérieur des coupelles 35a qui constituent des paliers pour cette roue-écrou 9a. Le diamètre extérieur de chaque coupelle 35a est tel que l'engagement de ces coupelles dans le manchon 30a s'effectue avec un léger serrage. Les deux coupelles 35a sont identiques et comportent une jupe cylindrique 35b et un fond transversal plan 35c muni d'un trou central pour le passage de la vis 12a. La concavité de chaque coupelle 35a est tournée vers la roue-écrou 9a. La longueur axiale h de la jupe cylindrique est telle que, lorsque la coupelle 35a a été enfoncée dans le manchon 30a et que la face extérieure du fond 35c se trouve dans le plan de l'extrémité du manchon, le bord interne de cette jupe cylindrique recouvre la zone la plus proche m du bord de la fenêtre 32a. Les deux zones m sont situées de part et d'autre des deux sommets de ce qui peut être considéré comme le petit axe du contour, formé par une courbe gauche, de la fenêtre 32a. Les deux sommets en question sont formés par les intersections du contour de la fenêtre 32a et du plan orthogonal à l'axe du tube 10a et médiateur de cette fenêtre 32a. Ce plan passe par l'axe du manchon 30a lorsque le tube 10a a été correctement engagé dans ce manchon. La coopération des jupes cylindriques 35b avec les zones m du contour de la fenêtre 32a assure le blocage du manchon 30a et donc de l'étrier 26a, sur le tube 10a. La vis 8a fait saillie dans l'espace libre qui subsiste entre les bords internes des coupelles 35a.

Ces coupelles 35a, qui sont en quelque sorte des coupelles de guidage de la roue 9a, sont interchangeables selon le diamètre de la roue 9a. Ainsi un même manchon 30a combiné avec des coupelles 35a appropriées peut convenir à divers diamètres de la roue 9a.

La roue-écrou 9a peut être en matière plastique dure tandis que les coupelles 35a sont métalliques.

Le manchon 30a est destiné à venir entre les branches 27a, 28a de la chape S de sorte que l'axe de ce manchon 30a soit aligné avec les centres des trous 29a. De préférence, on prévoit des rondelles anti-friction et antibruit 36a entre la face interne des branches 27a, 28a et la coupelle 35a voisine. Ces rondelles peuvent comporter une collerette 37a, du côté opposé à la coupelle 35a, destinée à être engagée dans le trou 29a. La vis 12a traverse ces collerettes 37a.

Les rondelles 36a peuvent être solidaires du couvercle 34a de telle sorte que l'ensemble forme un cavalier qui peut venir coiffer le manchon 30a.

Le montage du réducteur R, représenté sur la figure 5, est extrêmement simple et rapide et résulte des explications précédentes.

L'extrémité du tube 10a est engagée par coulissement dans le manchon 31a d'une manière telle que la fenêtre 32a vienne en regard de l'ouverture W. La vis 8a fait saillie, par des filets, à travers cette ouverture W.

On enfile, ensuite, la roue 9a dans le manchon 30a par un mouvement de translation accompagné d'un mouvement de rotation de sorte que la denture extérieure de la roue 9a engrène avec la vis 8a. Lorsque cet engrènement est réalisé, l'étrier 26a est bloqué en translation suivant la direction de l'axe du tube 10a. On met en place les coupelles 35a sur les extrémités de la roue 9a. On peut fermer à ce moment la fente 33a par le couvercle 34a, mais cette fermeture pourrait avoir lieu plus tard.

Après avoir mis en place les rondelles anti-friction 36a contre la face interne des branches 27a, 28a, on engage l'étrier 26a entre ces branches de sorte que le manchon 30a soit coaxial avec les trous 29a.

En faisant passer la vis 12a par les trous 29a, on engage cette vis 12a dans l'écrou de la roue-écrou 9a en la faisant tourner pour réaliser un vissage.

Le montage du réducteur R proprement dit est alors terminé. Il reste à monter la vis 12a dans le volet 13a, ce dernier étant ensuite monté sur le flanc 22 du coulisseau 3a.

L'encombrement du réducteur R, formé en quelque sorte par l'ensemble de la vis 8a, de la roue 9a, de l'étrier 26a et de la chape S, est réduit.

Le tube 10a, de longueur réduite, est solidaire du carter 6 du moteur. Le couple de réaction du moteur 5, qui s'exerce sur le carter 6 est transmis par le tube 10a à l'étrier 26a, qui le transmet à la chape S et au bâti. Ainsi, aucune liaison directe n'est nécessaire entre le carter 6 et le bâti 2.

Le moteur 5 est situé plus près de la glissière 4a que de la glissière 4b, comme visible sur la figure 1. Alors que le tube 10a, de plus courte longueur, est solidaire du carter 6, l'autre tube plus long 10b peut être engagé libre en coulissement et en rotation dans un manchon 37 prolongeant le carter 6.

Le fonctionnement du dispositif décrit précédemment est le suivant.

Pour déplacer le siège 1 en translation sur les glissières 4a, 4b, on commande la mise en marche du moteur 5 dans un sens de rotation correspondant au sens de déplacement souhaité.

La rotation du moteur provoque la rotation à vitesse réduite des roues-écrous 9a, 9b qui sont maintenues fixes suivant la direction de l'axe A. La coopération de l'écrou 11a, 11b entraîné en rotation avec la vis associée 12a, 12b immobilisée en rotation provoque le déplacement longitudinal, suivant la direction de l'axe A, des vis 12a, 12b et donc des coulisseaux 3a, 3b et du siège 1 lié à ces coulisseaux.

Du fait que les arbres 7a, 7b sont rigides et ont une longueur déterminée, et qu'en outre les étriers 26a, 26b sont liés rigidement aux tubes 10a, 10b eux-mêmes liés à la carcasse du moteur 5, la distance transversale H (figure 1) entre les deux axes A des vis 12a, 12b est constante dans le plan transversal passant par l'axe du moteur.

Or, du fait des tolérances de fabrication, inévitables, le parallélisme entre les glissières 4a et 4b et donc entre les vis 12a, 12b ne peut être parfait. En outre, l'orthogonalité entre les vis 12a, 12b d'une part, et les arbres 7a, 7b ne peut non plus être parfaite.

Grâce au montage des vis 12a, 12b avec une possibilité de débattement suivant la direction D, la variation possible de la distance entre les axes des vis 12a, 12b au cours de leur translation est compensée par leur léger déplacement transversal de manière à rester constamment égal à H dans le plan transversal passant par l'axe du moteur 5, sans qu'il en résulte des contraintes inadmissibles au niveau des différentes pièces qui coopèrent entre elles.

Le montage est particulièrement simple et économique puisqu'il est possible d'utiliser des arbres rigides liés au rotor du moteur par exemple par de simples emmanchements à force.

Il est à noter que le défaut de parallélisme entre les glissières 4a et 4b peut atteindre quelques millimètres, c'est-à-dire que la différence entre les écartements avant et arrière de ces glissières peut être de l'ordre de quelques millimètres alors que pour un parallélisme rigoureux cette différence serait nulle. Le montage flottant des vis 12a, 12b, selon l'invention, permet d'absorber aisément un tel écart.

En se reportant à la figure 4, on peut voir l'application d'un dispositif selon l'invention à la commande du déplacement en rotation d'un élément constitué par exemple par le dossier 38, schématiquement représenté, d'un siège de véhicule automobile. Ce dossier 38 peut tourner autour d'un pivot constitué par un axe transversal 39, perpendiculaire au plan de la figure 4.

Les pièces du dispositif de commande de la figure 4 jouant un rôle semblable à des pièces déjà décrites avec références aux figures 1 à 3 seront désignées par un nombre égal à la somme du nombre 100 et de la référence numérique désignant la pièce semblable des figures 1 à 3. La description de ces pièces sera effectuée succinctement, ou ne sera pas reprise, puisqu'elle a été déjà effectuée au sujet des figures 1 à 3.

La vis 112a engagée dans la roue-écrou 109a est liée, à une extrémité, au dossier 38 par une articulation 40 dont le centre est situé à une distance 1 du pivot 39. L'articulation 40 est formée, par exemple, par une rotule 41 solidaire du dossier 38, cette rotule étant propre à coopérer avec un logement complémentaire prévu dans une tête 42 solidaire de la vis 112a.

L'articulation 40 autorise non seulement une rotation de la vis 112a autour d'un axe parallèle au pivot 39 et passant par le centre de l'articulation 40, mais également un débattement angulaire suffisant de la vis 112a dans un plan parallèle à l'arbre 107a du moteur, et dont la trace, sur le plan de la figure 4, est constituée par la ligne P confondue avec l'axe de la vis 112a. Autrement dit, l'axe de ladite vis 112a peut, par suite du débattement autorisé, sortir du plan de la figure 4.

La roue-écrou 109a est montée avec une possibilité de rotation autour d'un axe transversal parallèle au pivot 39 et dont la trace, sur le plan de la figure 4, est représentée par le point B. Ce point est situé sur l'axe géométrique de la roue 109a, à mi-longueur. Selon l'exemple de montage de la figure 4, permettant une telle rotation, l'ensemble moteur 105 et de l'étrier 126a est monté sur un support 43, solidaire du bâti, avec une possibilité d'oscillation autour de l'axe passant par le point B.

Le support 43 est constitué par une sorte de profilé en U dont la partie telle que 44, de chaque aile, éloignée de la branche transversale du U, est incurvée suivant une forme de calotte sphérique, ou éventuellement selon une partie de surface cylindrique, tournant sa concavité vers l'intérieur du U. Chaque partie telle que 44 comporte une ouverture 45, pour le passage de la vis 112a, cette ouverture ayant une étendue angulaire suffisante pour permettre les débattements de la vis entre les deux positions extrêmes dont l'une est représentée en traits pleins et l'autre est représentée en traits mixtes sur cette figure 4. L'étrier 126a est muni, à chaque extrémité du manchon 130a de coupelles 135a semblables aux coupelles 35a décrites avec références à la figure 5, agencées pour servir de palier à la roue-écrou 109a et pour assurer le blocage de l'étrier sur le tube 110a ; des pièces de centrage 46, en forme de segments sphériques dont la surface convexe tournée vers l'extérieur est conjuguée de la surface concave des parties 44, sont prévues à chaque extrémité du manchon 130a et lesdites parties 44. En variante, les coupelles 135a pourraient avoir un fond sphérique conjugué des surfaces concaves 44.

Chaque pièce 46 comporte des ouvertures pour le passage de la vis 112a. Ces pièces 46 sont avantageusement réalisées en une matière anti-friction et peuvent être reliées entre elles par un élément transversal pour former un cavalier, (comme déjà expliqué au sujet des rondelles 35a de la figure 5) propre à venir coiffer le manchon.

L'ensemble du manchon 131a et de ces pièces 46 et, avec eux, le moteur 5, peuvent pivoter autour du point B constituant le centre des surfaces concaves des parties 44.

De préférence, une vis telle que 112a est prévue de chaque côté du dossier 38, les deux vis étant commandées par le même moteur 105 qui comporte deux sorties d'arbre comme représenté sur la figure 1.

Le fonctionnement du dispositif représenté sur la figure 4 résulte immédiatement des explications précédentes. L'entraînement de l'arbre 107a, par le moteur 105, dans un sens ou dans l'autre, provoque le déplacement de la vis 112a suivant la direction de son axe, cette vis étant empêchée de tourner autour dudit axe. Le dossier 38 est déplacé en rotation autour du pivot 39. Au cours de ce déplacement, l'inclinaison de la vis 112a varie, de même que l'orientation du moteur 105 autour de l'axe, perpendiculaire au plan de la figure 4 passant par le point B.

Bien que la vis 112a soit emprisonnée dans l'écrou 111a de la roue-écrou 109a, un défaut de parallélisme entre le pivot 39 et l'arbre 107a peut être absorbé par la possibilité de débattement de la vis 112a suivant une direction sensiblement parallèle à celle de l'arbre moteur 107a. De même, un défaut d'orthogonalité entre la vis 112a et l'arbre 107a peut être également compensé.

En se reportant à la figure 7, on peut voir une représentation schématique partielle d'une variante de réalisation selon laquelle la vis 212a est immobilisée en translation suivant son axe par rapport au bâti (non représenté), tandis que le moteur 205, son carter 206 et les étriers tels que 226a sont mobiles en translation, parallèlement à l'axe de la vis 212a. Le carter 206 est lié à l'élément à déplacer, par exemple un siège de véhicule. La vis 212a est toujours montée dans un volet 213a dont l'échancrure 215a s'ouvre vers le haut ; ce volet est monté, comme expliqué précédemment avec possibilité d'un débattement angulaire autour d'un axe longitudinal. Toutefois, selon la variante de la figure 7, le volet 213a est monté non pas sur un coulisseau mobile, mais sur une pièce, par exemple la glissière (non représentée) fixe par rapport au bâti.

Il est clair que le dispositif de commande décrit avec référence aux figures 1 à 3 peut servir à commander d'autres déplacements en translation que celui décrit dans l'exemple particulier. On peut commander :
- le réglage en hauteur du siège (rehausse) ;
- le réglage en site du siège ;
- le réglage en hauteur de l'appuie-tête.

Le dispositif peut aussi servir à la commande d'un lève-glace, d'un toit ouvrant, éventuellement d'un cric.

La figure 8 est un schéma d'une variante de réalisation pour la commande en hauteur du siège 1. Sous l'assise du siège, à l'avant et à l'arrière sont prévus, de chaque côté, des pattes 47 et 48 solidaires de l'assise, portant des pivots respectifs 49, 50. Sur chaque pivot est articulée l'extrémité d'une biellette 51, 52 en forme de levier coudé sensiblement à angle droit. Ces biellettes 51, 52 sont articulées, vers le sommet de l'angle, sur des axes 53, 54 fixes par rapport aux coulisseaux. Les extrémités inférieures des biellettes 51, 52 sont reliées, de manière articulée, aux extrémités d'une vis 312a, semblable à la vis 12a déjà évoquée. Cette vis 312a traverse un réducteur R, semblable à celui déjà décrit, immobilisé par rapport aux coulisseaux. Un moteur, semblable au moteur 5 des figures 1 et 5 entraîne la roue-écrou (non visible) du réducteur qui provoque, par sa rotation, le déplacement en translation de la vis 312a. Il en résulte une rotation simultanée des biellettes 51, 52 autour de leurs axes 53, 54, le sens de cette rotation dépendant du sens du déplacement en translation de la vis 312a par rapport au bâti. Le siège 1 monte ou descend suivant le sens de rotation des biellettes 51, 52.

Il est à noter que, dans tous les cas, le réducteur R est du type irréversible, c'est-à-dire que le moteur peut entraîner la charge par l'intermédiaire de la roue-écrou, tandis que l'inverse n'est pas possible.

En variante du dispositif de la figure 8, on pourrait prévoir, à l'avant du siège, à la place des biellettes 51, deux glissières verticales combinées avec des vis verticales et un moteur, d'une manière semblable à celle décrite pour les figures 1 et 5. Les biellettes arrière 52 seraient commandées par un moteur différent, de sorte que le siège pourrait être réglé en site (inclinaison par rapport à l'horizontale).

La description qui précède a été effectuée avec des réalisations faisant intervenir une roue-écrou 9a. Il est clair, cependant, que l'agencement particulièrement avantageux du réducteur R peut convenir dans le cas où la roue 9a serait solidaire en rotation avec la vis 12a. La coopération de la roue et de la vis est alors constituée par la liaison en rotation des deux pièces.

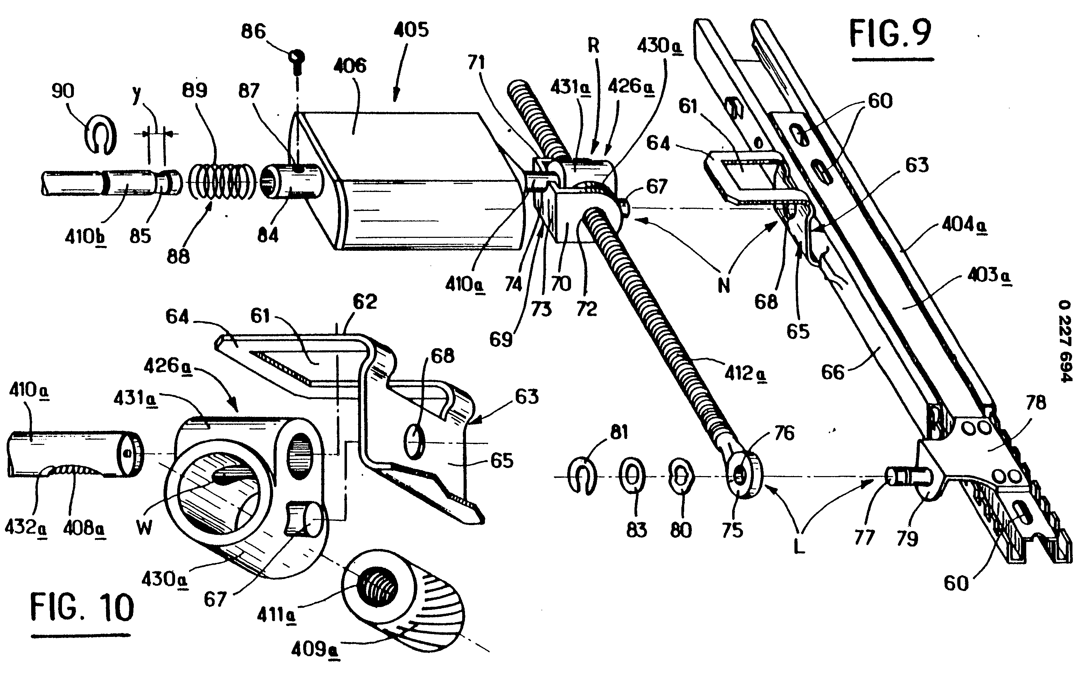

En se reportant à la figure 9, on peut voir un dispositif de commande du déplacement d'un élément constitué par un coulisseau 403a propre à se déplacer en translation dans une glissière de guidage 404a. Le dispositif peut être utilisé, en particulier, pour la commande du déplacement d'un siège (non représenté) de véhicule automobile. Le coulisseau 403a serait fixé sous le siège notamment à l'aide des ouvertures 60 de forme oblongue prévues à divers endroits de ce coulisseau, tandis que la glissière 404a serait fixée sur le plancher du véhicule.

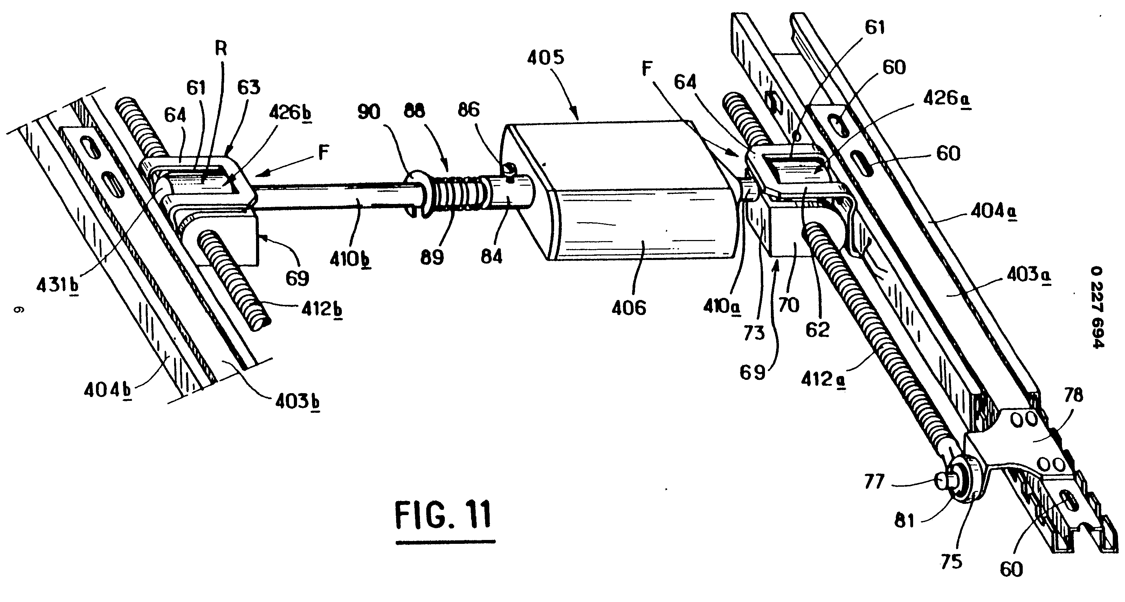

Le dispositif de commande comprend un moteur électrique 405 ayant un carter ou carcasse 406. L'axe du moteur est disposé sensiblement orthogonalement à la glissière 404a. Généralement, le moteur 405 est disposé entre deux glissières 404a, 404b (ou organes équivalents), comme visible sur la figure 11 ; le moteur 405 comporte deux sorties d'arbres orientées sensiblement orthogonalement aux glissières. Chaque arbre du moteur est muni, à une extrémité, d'une vis sans fin telle que 408a (figure 10), ou équivalent, propre à entraîner une roue associée 409a dont l'axe est orthogonal à la direction de l'arbre du moteur. Les arbres rotatifs du moteur sont disposés à l'intérieur du tube de protection 410a, 410b liés ou destinés à être liés à la carcasse 406 du moteur.

La roue 409a est du type roue-écrou, c'est-à-dire qu'elle comporte, sur sa surface extérieure, une denture propre à coopérer avec la denture hélicoïdale de la vis sans fin 408a ; cette roue-écrou 409a comporte en outre un alésage 411a taraudé propre à coopérer, à la manière d'un écrou, avec une vis 412a, ou organe équivalent ; l'axe A de la roue 409a, lorsque le dispositif est monté, est orthogonal à l'arbre du moteur 405.

L'ensemble de la vis sans fin 408a et de la roue 409a appartient à un réducteur R qui comprend un étrier 426a comportant deux manchons cylindriques sécants 430a, 431a orthogonaux. Les volumes intérieurs de ces manchons communiquent par une ouverture W (figure 10) correspondant à leur intersection. Le manchon 430a dont la paroi cylindrique extérieure est fermée, est ouvert à ses deux extrémités axiales et est propre à recevoir la roue 409a elle-même destinée à être traversée par la vis 412a. L'autre manchon 431a reçoit l'extrémité du tube 410a dans lequel est logé l'arbre du moteur et la vis sans fin 408a. A cette extrémité, comme visible sur la figure 10, le tube 410a comporte, sur sa paroi cylindrique, une fenêtre 432a correspondant à l'intersection des manchons 430a et 431a. Des filets de la vis sans fin 408a font saillie à travers la fenêtre 432a.

Pour le montage du réducteur R la susdite extrémité du tube 410a est enfilée dans le manchon 431a de l'étrier 426a afin que la fenêtre 432a vienne en regard de l'ouverture W et que des filets de la vis 408a viennent engrener avec la roue-écrou 409a.

Le dispositif comprend des moyens de retenue F de l'étrier 426a par rapport à un support lié à l'un des organes constitués par l'élément 403a ou le bâti. Dans l'exemple envisagé, les moyens de retenue F sont liés à la glissière 404a elle-même fixée sur le bâti constitué, dans l'exemple envisagé, par le plancher d'un véhicule automobile.

Des moyens de liaison L sont prévus entre une extrémité de la vis 412a et l'autre organe, qui, dans le cas présent, est constitué par le coulisseau 403a.

Il est clair que le dispositif de commande pourrait servir à commander un mouvement de rotation autour d'un axe géométrique fixe (par exemple pour le réglage de l'inclinaison d'un siège de véhicule) au lieu de la commande en translation envisagée à titre d'exemple sur les figures 9 et 11.

Les moyens de retenue F comprennent une fenêtre 61, ou analogue, limitée par un cadre 62 solidaire d'une paroi de la glissière 404a, constituant le support évoqué précédemment. La fenêtre 61 est propre à recevoir une partie de l'étrier 426a, comme visible sur la figure 11 de sorte que le cadre 62 de cette fenêtre entoure ladite partie de l'étrier 426a pour s'opposer à un déplacement de cet étrier parallèlement à l'arbre du moteur et à l'axe géométrique des tubes tels que 410a.

La fenêtre 61 a généralement une forme rectangulaire, dont la grande dimension est orientée orthogonalement à la direction longitudinale de la glissière 404a. La fenêtre 61 est avantageusement prévue de manière à recevoir le manchon 431a qui est coaxial à l'arbre du moteur 405.

De préférence, la fenêtre 61 est ménagée dans une patte 63 solidaire du support constitué par la glissière 404a. Plus précisément, cette patte 63 est prévue sur le côté intérieur de la glissière 404a ; la patte 63 a la forme d'un dièdre sensiblement à angle droit dont une face 64 est sensiblement parallèle à l'arbre du moteur 405, c'est-à-dire à l'axe géométrique du tube 410a, tandis que l'autre face 65 du dièdre est écartée de la paroi interne 66 de la glissière 404a tout en étant sensiblement parallèle à cette paroi interne 66. Le bord de la face 65 éloigné de l'arête du dièdre et de l'autre face 64, est relié rigidement à la paroi interne 66. Selon la représentation de la figure 9, la face 64 est horizontale et située au niveau supérieur tandis que le bord de la face 65 solidaire de la paroi 66 est situé à un niveau inférieur. La patte 63 peut être fixée par soudage ou par tout autre moyen sur la paroi 66. En variante, cette patte 63 peut être obtenue à partir d'une bande de matière découpée dans la glissière 404a et repliée convenablement.

Des moyens de liaison conjugués N sont prévus sur l'étrier 426a et sur le support constitué par la glissière 404a. Ces moyens de liaison N sont propres à entrer en coopération lors du montage de l'étrier 426a dans la fenêtre 61, afin d'empêcher un déplacement de l'étrier 426a par rapport à la glissière 404a suivant une direction sensiblement orthogonale au plan moyen de la fenêtre. Selon la représentation de la figure 9, ces moyens N sont propres à empêcher un déplacement, au moins suivant la direction verticale, de l'étrier 426a par rapport à la glissière 404a, le plan moyen de la fenêtre 61 étant sensiblement horizontal.

De préférence, les moyens de liaison N sont constitués par l'ensemble d'un téton 67 et d'un trou 68 propre à recevoir ce téton. Avantageusement, le téton 67 est prévu sur la paroi extérieure de l'étrier 426a et plus précisément du manchon 430a (voir figure 10) et fait saillie vers l'extérieur, parallèlement à l'arbre du moteur 405, en direction de la glissière 404a. Le trou 68 est prévu dans la face 65 de la patte 63 ; du fait que la face 65 est écartée de la paroi interne 66 de la glissière, le téton 67 peut faire saillie, à travers le trou 68, au-delà de la face 65 vers la paroi 66. Le téton 67 a généralement une section circulaire et le trou 68, également circulaire, a un diamètre suffisant pour recevoir le téton 67 avec un jeu permettant le montage de l'ensemble.

Une pièce d'encadrement 69, à section transversale en U, peut être prévue pour entourer le manchon 430a. Cette pièce 69 présente deux faces planes parallèles 70, 71 entourant les extrémités du manchon 430a. Les faces 70, 71 comportent des trous tels que 72 pour le passage de la vis 412a. La partie 73 de la pièce 69, qui assure la liaison entre les branches du U comporte une encoche 74 ou équivalent propre à recevoir le tube 410a. Dans l'exemple de réalisation de la figure 9, cette encoche 74 est prévue sur le bord supérieur de la partie 73 et est sensiblement semi-circulaire.

Les moyens de liaison démontables L entre la vis 412a et le coulisseau 60 comprennent une tête 75 prévue à une extrémité de la vis et munie d'un œil ou alésage 76. Du côté du coulisseau 403a, les moyens de liaison L comprennent un axe 77 destiné à être engagé dans l'œil 76. L'axe 77 est solidaire d'une pièce 78, en forme d'équerre, fixée sur le coulisseau 403a. L'axe 77 fait saillie, du côté intérieur de la glissière 66, suivant une direction sensiblement parallèle à celle de l'arbre du moteur 405. Un jeu radial suffisant est prévu entre le diamètre extérieur de l'axe 77 et le diamètre intérieur de l'œil 76 pour permettre les débattements angulaires nécessaires au fonctionnement et au montage du dispositif. La tête 75 et l'œil 76 sont serrés, suivant la direction de l'axe 77, entre une butée 79 solidaire de cet axe et des moyens élastiques avantageusement formés par une rondelle déformable 80 permettant un rattrapage de jeu. La butée 79 est avantageusement formée par l'aile de l'équerre 78 qui porte l'axe 77 et qui est orthogonale à cet axe. La rondelle déformable 80, située du côté de la tête 75 opposé à la butée 79, prend appui sur l'axe 77 par l'intermédiaire d'une bague fendue 81 destinée à être ancrée dans une gorge annulaire 82 prévue sur l'axe 77. Une rondelle plate 83 peut être disposée entre la rondelle déformable 80 et la bague fendue 81.

Dans l'exemple de réalisation envisagé, le moteur 405 comprend deux sorties d'arbre destinées à entraîner deux réducteurs 426a, 426b (voir figure 11) prévus à chaque extrémité des arbres. Le moteur 405 est situé plus près du réducteur 426a ; le tube 410a, de plus courte longueur, qui entoure l'arbre correspondant peut être solidaire du carter 406 du moteur. Le tube 410b, de plus grande longueur, entourant l'arbre situé de l'autre côté du moteur, est avantageusement monté avec une possibilité de coulissement parallèlement à l'arbre du moteur, suivant une amplitude limitée.

Le montage coulissant du tube 410b peut être réalisé en prévoyant à l'extrémité du carter 406 associée à ce tube, un manchon 84 destiné à recevoir l'extrémité du tube 410b. Sur cette extrémité, une gorge périphérique 85 (figure 9) est prévue pour coopérer avec un pion notamment formé par une vis 86 fixée dans un trou taraudé 87. La vis 86 traverse radialement la paroi du manchon 84 de manière à faire saillie dans la gorge 85 lorsque l'ensemble est monté. Il convient de noter que la vis 86 ne vient pas exercer un serrage radial contre le fond de la gorge 85 mais fait simplement saillie, dans cette gorge, d'une distance suffisante pour venir en butée, suivant la direction axiale, contre les épaulements radiaux situés aux deux extrémités de la gorge 85. La longueur axiale y de cette gorge 85 détermine l'amplitude du débattement autorisé pour le tube 410b suivant la direction axiale.

Des moyens élastiques 88 sont prévus pour écarter le tube 410b du carter 406 du moteur, notamment afin de rattraper les défauts d'écartement éventuels entre les glissières 404a, 404b et les coulisseaux 403a, 403b. De préférence, les moyens élastiques 88 sont constitués par un ressort en hélice 89 destiné à travailler en compression. Ce ressort 89 est propre à être engagé autour du tube 410b et à prendre appui, d'un côté, contre l'extrémité du manchon 84 et, de l'autre côté, contre une butée 90, notamment formée par une bague fendue ancrée dans une gorge périphérique prévue sur le tube 410b.

Ceci étant, le montage et l'assemblage d'un dispositif de commande conforme à l'invention s'effectuent de la manière suivante, qui se déduit aisément des explications précédentes.

Les arbres de sortie du moteur 405 sont mis en place sur chacune des sorties ainsi que les tubes 410a, 410b. Les étriers 426a, 426b sont montés sur les extrémités des tubes 410a, 410b qui sont enfilées dans les manchons 431a, 431b.

Les roues telles que 409a sont montées dans l'autre manchon 430a de sorte que le filetage extérieur de chaque roue vienne coopérer avec les filets des vis sans fin telles que 408a faisant saillie à travers l'ouverture 432a. Les pièces telles que 70 sont alors mises en place pour encadrer les manchons 430a, 430b et les vis 412a, 412b sont engagées dans l'écrou des roues correspondantes.

Les têtes 75 des vis telles que 412a sont maintenues à un niveau différent de celui des axes 77 de telle sorte que les étriers tels que 426a soient inclinés par rapport à la verticale. L'ensemble est agencé de telle sorte que l'étrier 426a, ainsi incliné, puisse être introduit sous la face 64 du dièdre, alors que le téton 67 est engagé dans le trou 68. Il est à noter que la possibilité de coulissement axial du tube 410b facilite la mise en place du téton analogue au téton 67 prévu sur l'étrier 426b.

Lorsque les tétons tels que 67 ont été mis en place, les vis telles que 412a sont déplacées suivant un mouvement de basculement sensiblement autour de l'axe du téton 67, de manière à amener l'œil 76 en face de l'axe 77.

Au cours du mouvement de rotation ou de basculement de la vis 412a autour de l'axe du téton 67, le manchon 431a décrit un mouvement autour de l'axe du téton 67 qui fait entrer la partie supérieure cylindrique du manchon 431a dans la fenêtre 61. Les faces planes d'extrémité du manchon 431a viennent au voisinage des petits côtés de la fenêtre 61, parallèles à la direction longitudinale de la glissière 404a ; la coopération de ces faces planes d'extrémité du manchon 431a et des petits côtés de la fenêtre 61 assure le maintien en place de l'étrier 426a suivant une direction parallèle à celle de l'arbre du moteur. L'axe 77 est ensuite engagé dans l'œil 76 par un mouvement d'oscillation de la vis 412a dans un plan passant par l'axe de cette vis et l'axe géométrique de l'axe 77. Ce mouvement d'oscillation est rendu possible par les jeux prévus entre les différentes pièces qui coopèrent. La tête 75 est ensuite bloquée à l'aide de la rondelle élastique 80, de la rondelle plate 83 et de la bague 81 qui est mise en place dans la gorge 82.

La liaison établie entre la tête 75 et l'axe 77 assure le verrouillage du réducteur R par rapport à la patte 63 et à la glissière 404a. Pour pouvoir séparer le réducteur R et l'étrier 426a de la patte 63, il faut commencer par dégager la tête 75 de l'axe 77, pour permettre le basculement de la vis 412a autour de l'axe du téton 67 et pour dégager le manchon 431a de la fenêtre 61.

Il est à noter que l'engagement et le dégagement du manchon 431a vis à vis de cette fenêtre 61 peut être facilité par un léger mouvement de basculement autour d'un axe sensiblement parallèle à l'axe longitudinal de la glissière 404a. Le montage ou le démontage du côté de l'autre glissière 404b s'effectue dans les mêmes conditions qu'évoquées ci-dessus.

Ce montage est donc réalisé d'une manière simple et rapide tout en étant particulièrement efficace. .

L'exemple de réalisation décrit concerne essentiellement un dispositif de commande d'un déplacement en translation.

Il est clair que le dispositif de l'invention peut servir à commander un mouvement de rotation, par exemple pour régler l'inclinaison du dossier d'un siège de véhicule automobile. La tête 75 de la vis serait alors reliée à une pièce décrivant un mouvement de rotation autour d'un axe transversal. La vis 412a aurait une inclinaison variable selon la position angulaire de la pièce commandée.

## Revendications

1. Dispositif de commande du déplacement d'un élément par rapport à un bâti comprenant un moteur (5) ayant un arbre (7a) muni à une extrémité d'une vis sans fin (8a), ou équivalent, propre à entraîner une roue-écrou dont l'axe est orthogonal à la direction de l'arbre du moteur, l'ensemble de la vis sans fin et de la roue-écrou (9a) appartenant à un réducteur (R), tandis qu'une vis (12a), ou analogue, coopère avec l'écrou de la roue-écrou, caractérisé par le fait que le réducteur (R) comprend un étrier (26a) comportant deux manchons cylindriques sécants (30a, 31a), orthogonaux, les volumes intérieurs de ces manchons communiquant par une ouverture (W) correspondant à leur intersection, l'un (30a) de ces manchons étant propre à recevoir la roue (9a), et par le fait que la vis sans fin (8a) est logée dans un tube (10a), lié au carter (6) du moteur (5), le tube comportant, sur sa paroi cylindrique, à une extrémité destinée à être engagée dans l'autre manchon, une fenêtre (32a) correspondant à l'intersection des manchons, de sorte que, pour le montage du réducteur, la susdite extrémité du tube (10a) est enfilée dans l'autre manchon (31a) de l'étrier (26a), afin que la susdite fenêtre (32a) vienne en regard de la susdite ouverture (W) et que des filets de la vis (8a) fassent saillie à travers ladite fenêtre (32a) pour engrener avec la roue-écrou (9a), laquelle est enfilée dans le premier manchon (30a), qui est monté entre deux branches (27a, 28a) qui comportent des trous (20a) pour le passage de la vis (12a).

2. Dispositif selon la revendication 1, pour un élément guidé par deux glissières (4a, 4b) sensiblement parallèles, écartées transversalement l'une de l'autre, caractérisé par le fait que le moteur (5) est disposé entre ces deux glissières (4a, 4b) et comporte deux sorties d'arbre (7a, 7b) orientées sensiblement orthogonalement aux glissières, le moteur (5) étant situé plus près d'une glissière (4a) que de l'autre, et le tube (10a), de plus courte longueur, situé entre le moteur (5) et la glissière (4a) la plus proche, est solidaire du carter (6) du moteur.

3. Dispositif selon la revendication 1 ou 2, caractérisé par le fait que les branches (27a, 28a) entre lesquelles est monté le manchon (30a) de l'étrier, sont les branches d'une chape (S) fixée sur l'une des deux parties constituées par l'élément à déplacer (1) et le bâti (2), les branches de cette chape comportant des trous (29a) pour le passage de la vis (12a).

4. Dispositif selon l'une quelconque des revendications précédentes, caractérisé par le fait que des coupelles (35a) sont engagées sur la roue (9a), à chaque extrémité du manchon (30a), avec un léger serrage, ces coupelles servant de palier à la roue (9a).

5. Dispositif selon la revendication 4, caractérisé par le fait que les coupelles (35a) comportent une jupe cylindrique (35b) dont la longueur axiale (h) est telle que le bord interne de cette jupe recouvre la zone la plus proche (m) du bord de la fenêtre (32a) du tube (10a).

6. Dispositif selon la revendication 4 ou 5, caractérisé par le fait que la roue (9a) est en matière plastique dure, tandis que les coupelles (35a) sont métalliques.

7. Dispositif selon l'une quelconque des revendications 1 à 6, dans lequel la vis (12a, 12b, 112a) est immobilisée en rotation autour de son axe et étant liée à l'élément à déplacer, des moyens de guidage du déplacement étant en outre prévus entre le bâti et l'élément, caractérisé par le fait que la vis (12a, 12b ; 112a), ou équivalent, destinée à être engagée dans l'écrou (11a, 11b ; 111a) de la roue-écrou (9a, 9b ; 109a) est montée sur l'élément à déplacer (1 ; 3a, 3b) avec une possibilité de débattement au moins suivant une direction (D) sensiblement parallèle à celle de l'arbre moteur (7a, 7b ; 107a).

8. Dispositif selon la revendication 7, caractérisé par le fait que la partie (7a, 7b ; 107a) de l'arbre d'entraînement du moteur s'étendant entre le moteur (5, 105) et la vis sans fin (8a, 8b ; 108a) est rigide et a une longueur déterminée.

9. Dispositif selon la revendication 7 ou 8 pour la commande du déplacement en translation d'un élément guidé par une glissière suivant une direction rectiligne, la vis (12a, 12b) étant orientée parallèlement à la direction de déplacement, caractérisé par le fait que la vis (12a, 12b) est montée sur l'élément (1, 3a, 3b) de manière à pouvoir se déplacer parallèlement à elle-même suivant une direction sensiblement orthogonale à celle de l'axe (A) de la vis.

10. Dispositif selon la revendication 9, caractérisé par le fait que la vis (12a, 12b) est solidaire d'un volet (13a, 13b) monté sur une partie (3a, 3b) dudit élément (1) avec une possibilité de débattement angulaire autour d'un axe longitudinal parallèle à la vis (12a, 12b), mais écarté de cette dernière.

11. Dispositif selon la revendication 9 ou 10 pour un élément guidé par deux glissières (4a, 4b) sensiblement parallèles, écartées transversalement l'une de l'autre, ledit élément (1) comportant des coulisseaux (3a, 3b) engagés sur chaque glissière, caractérisé par le fait que le moteur (5) est disposé entre ces deux glissières (4a, 4b) et comporte deux sorties d'arbre (7a, 7b) orientées sensiblement orthogonalement aux glissières, une vis (12a, 12b) liée à l'élément étant associée à chaque coulisseau (3a, 3b), tandis que l'extrémité voisine de la partie d'arbre correspondant (7a, 7b) est équipée d'une vis sans fin (8a, 8b) propre à coopérer avec une roue-écrou (9a, 9b) associée à chaque vis, chaque partie d'arbre moteur (7a, 7b) qui s'étend entre le moteur (5) et la roue-écrou associée (9a, 9b) étant rigide et ayant une longueur déterminée, tandis que chaque vis (12a, 12b) est montée, sur un coulisseau (3a, 3b) associé à une glissière, avec une possibilité de débattement suivant une direction (D) parallèle à celle de l'arbre moteur.

12. Dispositif selon la revendication 10 ou 11, caractérisé par le fait que chaque vis (12a, 12b) est portée par un volet (13a, 13b) constitué par une tôle disposée de chant, maintenue contre la face interne d'un coulisseau (3a, 3b) solidaire de l'élément, cette tôle présentant un organe d'articulation longitudinal tel qu'une nervure (21), propre à coopérer avec un flanc du coulisseau.

13. Dispositif selon l'une quelconque des revendications 10 à 12, caractérisé par le fait que le blocage en rotation de chaque vis (12a, 12b) par rapport au volet associé (13a, 13b) est assuré par la coopération d'un évidement (20) prévu à chaque extrémité de la vis, dans lequel est engagé le bord (17a, 18a) d'une échancrure (15a) prévue dans le volet pour servir de logement à la vis.

14. Dispositif selon la revendication 7 ou 8 pour la commande du déplacement en rotation d'un élément (38) autour d'un pivot (39), caractérisé par le fait que la vis (112a) engagée dans la roue-écrou (109a) est liée audit élément (38) par une articulation (40) autorisant un débattement angulaire suffisant de la vis (112a) dans un plan parallèle à l'arbre du moteur (107a), la susdite roue-écrou (109a) et le moteur (105) étant en outre montés avec une possibilité de rotation autour d'un axe parallèle au pivot (39).

15. Dispositif selon l'une quelconque des revendications 1 à 6, le dispositif comprenant en outre des moyens de retenue (F) de l'étrier par rapport à un support lié à l'un des deux organes constitués par le bâti et l'élément à déplacer, ainsi que des moyens de liaison démontables (L) entre la vis qui coopère avec la roue et l'autre organe, caractérisé par le fait que les susdits moyens de retenue (F) comprennent une fenêtre (61) ou analogue, limitée par un cadre (62) solidaire du support (404a), cette fenêtre (61) étant propre à recevoir une partie de l'étrier (426a) de sorte que le cadre (62) de cette fenêtre entoure ladite partie pour s'opposer à un déplacement de l'étrier (426a) parallèlement à l'arbre du moteur (405), et que des moyens de liaison conjugués (N) sont prévus sur l'étrier (426a) et le support (404a) pour entrer en coopération, lors du montage de l'étrier (425a) dans la fenêtre (61), afin d'empêcher un déplacement de l'étrier (426a) par rapport au support (404a) suivant une direction sensiblement orthogonale au plan moyen de la fenêtre (61), l'ensemble étant tel que le montage de l'étrier dans la fenêtre peut être effectué alors que la susdite vis (412a) n'est pas encore liée à l'autre organe (403a), tandis que le démontage de l'étrier (426a) par rapport à la fenêtre (61) se trouve empêché lorsque la susdite vis (412a) a été reliée à l'autre organe (403a).

16. Dispositif selon la revendication 15, caractérisé par le fait que la fenêtre (61) est prévue de manière à recevoir celui (431a) des manchons de l'étrier (426a) qui est coaxial à l'arbre du moteur (405).

17. Dispositif selon la revendication 15 ou 16, caractérisé par le fait que la fenêtre (61) est ménagée dans une patte (63) solidaire du support (404a).

18. Dispositif selon la revendication 17, caractérisé par le fait que la patte (63) a la forme d'un dièdre sensiblement à angle droit dont une face (64), qui comporte la susdite fenêtre (61), est sensiblement parallèle à l'arbre du moteur et à l'axe géométrique de la roue du réducteur, tandis que l'autre face (65) du dièdre est légèrement écartée du support (404a, 66) tout en étant reliée rigidement à ce dernier suivant son bord éloigné de l'arête du dièdre, les moyens de liaison conjugués (N, 68), au niveau du support étant prévus dans cette deuxième face (65) du dièdre.

19. Dispositif selon l'une quelconque des revendications 15 à 18, caractérisé par le fait que les moyens de liaison conjugués (N) de l'étrier (426a) et du support (404a) sont constitués par l'ensemble d'un téton (67) et d'un trou (68) propre à recevoir ce téton lors du montage.

20. Dispositif selon la revendication 19, caractérisé par le fait que le téton (67) est prévu sur l'étrier (426a) et fait saillie sensiblement parallèlement à la direction de l'arbre du moteur, tandis que le trou (68) est prévu sur le support (404a) ou sur un élément solidaire de ce support, notamment dans la face (65) d'une patte (63) fixée sur le support.

21. Dispositif selon l'une quelconque des revendications 15 à 20, caractérisé par le fait qu'il comporte une pièce d'encadrement (69), à section transversale en U, présentant deux faces planes (70, 71) parallèles destinées à entourer les extrémités du manchon (430a) de l'étrier recevant la roue (409a), ces faces comportant des trous (72) pour le passage de la vis (412a) qui coopère avec la roue, tandis que la partie (73) de la pièce d'encadrement qui assure la liaison entre les branches du U comporte une encoche (74) ou équivalent propre à recevoir un tube de protection (410a) qui entoure l'arbre du moteur.

22. Dispositif selon l'une quelconque des revendications 15 à 21, caractérisé par le fait que les moyens de liaison démontables (L) entre la vis (412a), qui coopère avec la roue, et l'autre organe (403a) comprennent une tête (75) muni d'un œil (76) ou alésage, à une extrémité de la vis, et, du côté de l'organe (403a), un axe (77) destiné à être engagé dans le susdit œil (76).

23. Dispositif selon la revendication 21, caractérisé par le fait que la tête (75) et l'œil (76) sont serrés, suivant la direction de l'axe (77), entre une butée (79) solidaire de cet axe et des moyens élastiques, notamment formés par une rondelle déformable (80), prenant appui sur ledit axe du côté opposé à la susdite butée (79).

24. Dispositif selon l'une quelconque des revendications 15 à 23, dans lequel le moteur comporte deux sorties d'arbre destinées à entraîner deux réducteurs prévus à chaque extrémité des arbres, le moteur étant situé plus près de l'un des réducteurs que de l'autre, caractérisé par le fait que le tube de plus grande longueur (410b) est monté avec une possibilité de coulissement parallèlement à l'arbre du moteur (405), suivant une amplitude limitée, des moyens élastiques (88) étant prévus pour écarter ce tube (410b) du carter (406) du moteur.

25. Dispositif selon la revendication 24, caractérisé par le fait qu'un manchon (84) est prévu à l'extrémité du carter (406) du moteur associé au tube (410b) de plus grande longueur, ce manchon étant destiné à recevoir l'extrémité du tube sur laquelle une gorge (85) est prévue pour coopérer avec un pion, notamment une vis (86), fixée sur le susdit manchon (84) et traversant la paroi de ce dernier de manière à faire saillie dans la gorge (85) du tube engagé dans le manchon, des moyens élastiques (88) d'écartement du tube prenant appui, d'un côté, contre l'extrémité du susdit manchon (84) ou contre une butée solidaire du carter (406) du moteur, et de l'autre côté contre une butée, notamment une bague (90) liée au tube.

26. Dispositif selon l'une quelconque des revendications précédentes pour la commande des déplacements d'un siège de véhicule automobile, en translation, en hauteur et/ou en site, ainsi que pour la commande de l'inclinaison du dossier du siège.

**Claims**

1. A device for controlling the displacement of an element in relation to a base, comprising a motor (5) having a shaft (7a) provided at one end with a worm (8a), or an equivalent, capable of driving a nut-wheel whose axis is orthogonal to the direction of the shaft of the motor, the unit of the worm and of the nut-wheel (9a) forming part of a reduction gear (R), whilst a screw (12a), or similar, cooperates with the nut of the nut-wheel, characterised in that the reduction gear (R) comprises a stirrup (26a) comprising two orthogonal intersecting cylindrical sleeves (30a, 31a), the internal spaces of these sleeves communicating via an opening (W) corresponding to their intersection, one (30a) of these sleeves being capable of receiving the wheel (9a), and in that the worm (8a) is accommodated in a tube (10a), connected to the casing (6) of the motor (5), the tube comprising on its cylindrical wall at one end intended to be engaged in the other sleeve, a window (32a) corresponding to the intersection of the sleeves, so that for the assembly of the reduction gear, the above mentioned end of the tube (10a) is fitted in the other sleeve (31a) of the stirrup (26a), so that the above mentioned window (32a) should come to be opposite the above mentioned opening (W) and that the threads of the worm (8a) should project through the said window (32a) to mesh with the nut-wheel (9a) which is fitted in the first sleeve (30a) that is mounted between two sides (27a, 28a) which comprise holes (20a) for the passing of the screw (12a).

2. A device according to Claim 1, for an element guided by two substantially parallel slides (4a, 4b) transversely interspaced from each other, characterised in that the motor (5) is disposed between these two slides (4a, 4b) and comprises two output shafts (7a, 7b) orientated substantially orthogonally to the slides, the motor (5) being situated nearer one slide (4a) than the other and the tube (10a), with the shorter length, situated between the motor (5) and the nearer slide (4a) is integral with the casing (6) of the motor.

3. A device according to Claim 1 or 2, characterised in that the sides (27a, 28a) between which the sleeve (30a) of the stirrup is mounted, are the sides of a forked end (S) fixed on one of the two parts constituted by the element to be displaced (1) and the base (2), the sides of this forked end comprising holes (29a) for the passing of the screw (12a).

4. A device according to any one of the preceding claims, characterised in that cups (35a) are engaged on the wheel (9a) at each end of the sleeve (30a) with a light grip, these cups serving as bearings for the wheel (9a).

5. A device according to Claim 4, characterised in that the cups (35a) comprise a cylindrical skirt (35b) whose axial length (h) is such that the internal edge of this skirt covers the nearest zone (m) of the edge of the window (32a) of the tube (10a).

6. A device according to Claims 4 or 5, characterised in that the wheel (9a) is made of a hard plastic material whilst the cups 35 (a) are metallic.

7. A device according to any one of Claims 1 to 6 in which the screw (12a, 12b ; 112a) is fixed in rotation around its axis and being connected to the element to be displaced, means for guiding the displacement being, moreover, provided between the base and the element, characterised in that the screw (12a, 12b ; 112a) or equivalent, intended to be engaged in the nut (11a, 11b ; 111a) of the nut-wheel (9a, 9b ; 109a) is mounted on the element to be displaced (1 ; 3a, 3b) with scope for displacement at least along one direction (D) substantially parallel to that of the motor shaft (7a, 7b ; 107a).

8. A device according to Claim 7, characterised in that the portion (7a, 7b ; 107a) of the drive shaft extending between the motor (5, 105) and the worm (8a, 8b ; 108a) is rigid and has a fixed length.

9. A device according to Claim 7 or 8 for controlling the translational displacement of an element guided by a slide along a rectilinear direction, the screw (12a, 12b) being orientated parallel to the direction of displacement, characterised in that the screw (12a, 12b) is mounted on the element (1, 3a, 3b) so as to be capable of displacement parallel to itself along a direction substantially orthogonal to that of the axis (A) of the screw.

10. A device according to Claim 9, characterised in that the screw (12a, 12b) is integral with a flap (13a, 13b) mounted on a part (3a, 3b) of the said element (1) with scope for angular deflection around a longitudinal axis parallel to the screw (12a, 12b), but separated from the latter.

11. A device according to Claim 9 or 10 for an element guided by two substantially parallel slides (4a, 4b) transversely interspaced from each other, the said element (1) comprising sliders (3a, 3b) enaged on each slide, characterised in that the motor (5) is disposed between these two slides (4a, 4b) and comprises two output shafts (7a, 7b) orientated substantially orthogonally to the slides, one screw (12a, 12b) connected to the element being associated with each slider (3a, 3b) whilst the end next to the corresponding shaft portion (7a, 7b) is provided with a worm (8a, 8b) capable of cooperating with a nut-wheel (9a, 9b) associated with each worm, each motor shaft portion (7a, 7b) extending between the motor (5) and the associated nut-wheel (9a, 9b) being rigid and having a fixed length, whilst each screw (12a, 12b) is mounted on a slider (3a, 3b) associated with one slide with scope for displacement along a direction (D) parallel to that of the motor shaft.

12. A device according to Claim 10 or 11, characterised in that each screw (12a, 12b) is carried by a flap (13a, 13b) constituted by a sheet disposed edge-wise, maintained against the internal face of a slider (3a, 3b) integral with the element, this sheet having a longitudinal articulation component such as a rib (21) capable of cooperating with one side of the slider.

13. A device according to any one of Claims 10 to 12, characterised in that the locking against rotation of each screw (12a, 12b) in relation to the associated flap (13a, 13b) is ensured by a groove (20) provided at each end of the screw, wherein the edge (17a, 18a) of a cut-out (15a) is engaged which is provided in the flap to serve as accommodation for the screw.

14. A device according to Claim 7 or 8 for controlling the rotational displacement of an element (38) around a pivot (39), characterised in that the screw (112a) engaged in the nut-wheel (109a) is connected to the said element (38) by an articulation (40) allowing the screw (112a) sufficient angular deflection in a plane parallel to the motor shaft (107a), the above mentioned nut-wheel (109a) and the motor (105) being, moreover, mounted with scope for rotation around an axis parallel to the pivot (39).

15. A device according to any one of Claims 1 to 6, the device comprising moreover means (F) for retaining the stirrup in relation to a support connected to one of the two components constituted by the base and the element to be displaced, as well as detachable connection means (L) between the screw which cooperates with the wheel and the other component, characterised in that the above mentioned retaining means (F) comprise a window (61), or similar, delimited by a frame (62) integral with the support (404a), this window (61) being capable of receiving a portion of the stirrup (426a) so that the frame (62) of this window surrounds the said portion to oppose any displacement of the stirrup (426a) parallel to the shaft of motor (405), and that conjugate connection means (N) are provided on the stirrup (426a) and the support (404a) to enter into cooperation during the fitting of the stirrup (426a) in the window (61), in order to prevent a displacement of the stirrup (426a) in relation to the support (404a) along a direction substantially orthogonal to the median plane of the window (61), the unit being such that the fitting of the stirrup in the window can be effected while the above mentioned screw (412a) has not yet been connected to the other component (403a), whilst a detachment of the stirrup (426a) in relation to the window (61) is prevented when the above mentioned screw (412a) has been connected to the other component (403a).

16. A device according to Claim 15, characterised in that the window (61) is designed in such a way as to receive that one, (431a) of the sleeves of the stirrup (426a) which is coaxial with the shaft of the motor (405).

17. A device according to Claim 15 or 16, characterised in that the window (61) is arranged in a tab (63) integral with the support (404a).

18. A device according to Claim 17, characterised in that the tab (63) has the shape of a substantially right angled dihedron whereof one face (64) which comprises the above mentioned window (61) is substantially parallel to the shaft of the motor and the geometrical axis of the wheel of the reduction gear, whilst the other face (65) of the dihedron is slightly removed from the support (404a, 66) whilst being rigidly connected to the latter along its edge remote from the edge of the dihedron, provision being made for conjugate connection means (N, 68) at the level of the support in this second face (65) of the dihedron.

19. A device according to any one of Claims 15 to 18, characterised in that the conjugate means (N) for connecting the stirrup (426a) and the support (404a) are constituted by the set of a stud (67) and a hole (68) capable of receiving this stud during assembly.

20. A device according to Claim 19, characterised in that the stud (67) is provided on the stirrup (426a) and projects substantially parallel to the direction of the shaft of the motor, whilst the hole (68) is provided on the support (404a) or on an element integral with this support, in particular in the face (65) of a tab (63) fixed to the support.

21. A device according to any one of Claims 15 to 20, characterised in that it comprises a surrounding component (69) with a channel shaped cross section having two flat parallel faces (70, 71) intended to surround the ends of the sleeve (430a) of the stirrup receiving the wheel (409a), these faces comprising holes (72) for the passing of the screw (412a) which cooperates with the wheel, while the part (73) of the surrounding component which ensures the connection between the sides of the channel comprises a slot (74) or equivalent, capable of accommodating a protective tube (410a) which surrounds the shaft of the motor.

22. A device according to any one of Claims 15 to 21, characterised in that the detachable connection means (L) between the screw (412a) which cooperates with the wheel, and the other component (403a) comprise a head (75) provided with an eve (76) or a bore at one end of the screw and on the side of the component (403a), a pin (77) intended to be engaged in the above mentioned eye (76).

23. A device according to Claim 21, characterised in that the head (75) and the eye (76) are gripped along the direction of the pin (77) between a stop (79) integral with this pin and elastic means, formed in particular by a deformable washer (80) bearing on the said pin on the opposite side to that of the above mentioned stop (79).

24. A device according to any one of Claims 15 to 23 wherein the motor comprises two output shafts intended to drive two reduction gears provided at each end of the shafts, the motor being situated nearer one of the reduction gears than the other, characterised in that the longer tube (410a) is mounted with scope for sliding parallel to the shaft of the motor (405) over a limited range, provision being made for elastic means (88) for distancing this tube (410a) from the casing (406) of the motor.

25. A device according to Claim 24, characterised in that provision is made for a sleeve (84) at the end of the casing (406) of the motor associated with the tube (410b) with the longer length, this sleeve being intended to receive the end of the tube whereon a groove (85) is provided to cooperate with a pin, a screw (86) in particular, fixed on the above mentioned sleeve (84) and passing through the wall of the latter so as to project into the groove (85) of the tube engaged in the sleeve, elastic means (88) for distancing the tube bearing on the one side against the end of the above mentioned sleeve (84) or against a stop integral with the casing (406) of the motor and on the other side, against a stop, in particular a ring (90) connected to the tube.

26. A device according to any one of the preceding Claims for controlling the displacements of a seat of a motor vehicle in translation, in height and/or angularly, as well as for controlling the inclination of the back of the seat.

**Patentansprüche**

1. Antriebsvorrichtung zum Verstellen eines Elementes relativ zum Rahmen, bestehend aus einem Motor (5) mit Antriebswelle (7a), die an einem Ende eine Schnecke (8a) o. ä. umfaßt, die ein Schneckenrad antreibt. Die Achse des Schneckenrads ist rechtwinklig zur Motorwelle. Schnecke und Schneckenrad (9a) gehören zu einem Untersetzungsgetriebe (R). Eine Schraube (12a) o. ä. läuft mit dem Innengewinde des Schneckenrades gleich. Die Vorrichtung ist dadurch gekennzeichnet, daß das Untersetzungsgetriebe (R) einen Bügel (26a) mit zwei rechtwinklig montierten, sich schneidenden zylindrischen Stutzen (30a, 31a) umfaßt ; die Stutzen stehen über eine Öffnung (W) in Verbindung, die ihrem Schnittpunkt entspricht, einer dieser Stutzen (30a) nimmt das Rad (9a) auf. Die Vorrichtung ist ebenfalls dadurch gekennzeichnet, daß die Schnecke (8a) in einem Rohr liegt (10a), das mit dem Gehäuse (6) des Motors (5) verbunden ist ; das Rohr hat an dem Ende der Zylinderwand, das in den anderen Stutzen gesteckt wird, ein Langloch (32a), das dem Schnittpunkt der Stutzen entspricht, so daß bei der Montage des Untersetzungsgetriebes das äußere Ende des Rohres (10a) in den anderen Stutzen (31a) des Bügels (26a) eingefädelt wird, damit das beschriebene Langloch (32a) gegenüber der genannten Öffnung (W) zu liegen kommt und das Schraubengewinde über das Langloch (32a) übersteht. So kann es mit dem Schneckenrad (9a) greifen, das im ersten Stutzen eingefädelt ist (30a), der zwischen zwei mit Bohrungen (20a) für die Schraube (12a) versehenen Schenkeln (27a, 28a) montiert wird.

2. Vorrichtung nach Anspruch 1 für ein Element, das von zwei ungefähr parallelen Laufschienen (4a, 4b) geführt wird, die quer zueinander verlaufen ; dadurch gekennzeichnet, daß der Motor (5) zwischen den zwei Laufschienen (4a, 4b) liegt und zwei Wellenausgänge (7a, 7b) umfaßt, die ungefähr rechtwinklig zu den Laufschienen angeordnet sind ; der Motor (5) befindet sich näher an Laufschiene (4a) als an der anderen, und das kürzere Rohr (10a), das zwischen dem Motor (5) und der näherliegenden Laufschiene (4a) liegt, ist mit dem Motorgehäuse kraftschlüssig verbunden.

3. Vorrichtung nach Anspruch 1 oder 2, dadurch gekennzeichnet, daß die Schenkel (27a, 28a), zwischen denen der Bügelstutzen (30a) montiert ist, die Schenkel eines Federbügels (S) sind, der entweder an dem zu bewegenden Teil (1) oder am Rahmen (2) befestigt wird. Die Schenkel des Federbügels sind mit Bohrungen (29a) für den Schraubendurchlaß (12a) versehen.

4. Vorrichtung nach einem der bisher genannten Ansprüche, dadurch gekennzeichnet, daß die Schalen (35a) an beiden Enden des Stutzens (30a) unter leichtem Druck auf das Rad (9a) gesetzt werden und diesem als Lager dienen.

5. Vorrichtung nach Anspruch 4, dadurch gekennzeichnet, daß die Schalen (35a) einen Kolbenmantel (35b) umfassen, dessen axiale Länge (h) ausreicht, um die Innenkante des dem Langloch (32a) am nächsten liegenden Bereichs (m) des Rohrs (10a) zu bedecken.

6. Vorrichtung nach Anspruch 4 oder 5, dadurch gekennzeichnet, daß das Rad (9a) aus hartem Kunststoff, die Schalen (35a) aber aus Metall bestehen.

7. Vorrichtung nach einem der bisher genannten Ansprüche 1 bis 6, in der sich die Schraube (12a, 12b ; 112a) nicht um die eigene Achse drehen kann und mit dem zu verstellenden Element verbunden ist ; zusätzlich sind zwischen Element und Rahmen Führungen vorgesehen ; dadurch gekennzeichnet, daß die Schraube (12a,12b ; 112a) o. ä., die in das Innengewinde (11a, 11b ; 111a) des Schneckenrades (9a, 9b ; 109a) greift, auf dem zu verstellenden Teil (1 ; 3a, 3b) montiert wird und mindestens in Richtung (D) ungefähr parallel zur Antriebswelle (7a, 7b ; 107a) verschoben werden kann.

8. Vorrichtung nach Anspruch 7, dadurch gekennzeichnet, daß Teil (7a, 7b ; 107a) der Motor-Antriebswelle, die zwischen Motor (5, 105) und Schnecke (8a, 8b ; 108a) verläuft, starr ist und eine bestimmte Länge aufweist.

9. Vorrichtung nach Anspruch 7 oder 8 zur Steuerung der Parallelverstellung eines durch Schienen geführten Elements in Längsrichtung, wobei Schraube (12a, 12b) parallel zur Laufrichtung liegt ; dadurch gekennzeichnet, daß Schraube (12a, 12b) so auf Element (1 ; 3a, 3b) montiert wird, daß sie sich parallel zu sich selbst ungefähr senkrecht zur Schraubenachse (A) verschieben kann.

10. Vorrichtung nach Anspruch 9, dadurch gekennzeichnet, daß Schraube (12a, 12b) in Klappe (13a, 13b) greift, die ihrerseits auf Teil (3a, 3b) des Elements (1) montiert wird ; es besteht die Möglichkeit der Drehung um eine Längsachse, die parallel zu Schraube (12a, 12b) verläuft, aber nicht mit der Schraubenachse identisch ist.

11. Vorrichtung nach Anspruch 9 oder 10 für ein Element, das durch zwei ungefähr parallele Schienen (4a, 4b) geführt wird, die quer zueinander verlaufen. Element (1) umfaßt auf jeder Laufschiene einen Schlitten (3a, 3b). Die Vorrichtung ist dadurch gekennzeichnet, daß Motor (5) zwischen den Führungsschienen (4a, 4b) angeordnet ist und zwei Wellenausgänge (7a, 7b) umfaßt, die ungefähr rechtwinklig zur Schiene liegen, sowie eine Schraube (12a, 12b), die mit dem Element bzw. je mit einem Schlitten (3a, 3b) verbunden ist. Das dem entsprechenden Wellenteil (7a, 7b) am nächsten liegenden Ende umfaßt eine Schnecke (8a, 8b), die in ein Schneckenrad (9a, 9b) pro Schraube greift, wobei jedes Teil der Welle (7a, 7b), die zwischen dem Motor (5) und dem Schneckenrad (9a, 9b) verläuft, starr ist und eine bestimmte Länge aufweist. Jede Schraube (12a, 12b) ist auf einem Schlitten (3a, 3b) befestigt, der sich parallel zur Antriebswelle in Richtung (D) verschieben kann.

12. Vorrichtung nach Anspruch 10 oder 11, dadurch gekennzeichnet, daß jede Schraube (12a, 12b) von einer Klappe (13a, 13b) getragen wird, die aus einem hochkant montierten Blech besteht und vor die Innenseite des Schlittens (3a, 3b) drückt, der kraftschlüssig mit dem Element verbunden ist. Das Blech umfaßt ein längsbewegliches Gelenk, z. B. Rippe (21), die seitlich in den Schlitten greift.

13. Vorrichtung nach einem der Ansprüche 10 bis 12, dadurch gekennzeichnet, daß die Drehsperre der Schrauben (12a, 12b) im Verhältnis zur Klappe (13a, 13b) durch eine Mulde (20) an jedem Ende der Schraube gewährleistet wird, in die Rand (17a, 18a) eines bogenförmigen Ausschnitts (15a) in der Klappe greift, der die Schraube aufnimmt.

14. Vorrichtung nach Anspruch 7 oder 8 zur Drehverstellung eines Elements (38) um einen Zapfen (39), dadurch gekennzeichnet, daß Schraube (112a) im Schneckenrad (109a) greift und mit Element (38) durch ein Gelenk (40) verbunden ist, das Schraube (112a) ausreichend Winkelausschlag parallel zur Antriebswelle (107a) verschafft. Schneckenrad (109a) und Motor (105) sind insbesondere so montiert, daß eine Drehbewegung um Zapfen (39) möglich ist.

15. Vorrichtung nach einem der Ansprüche 1 bis 6, zusätzlich mit einer Vorrichtung (F) verse-

hen, die den Bügel im Verhältnis zur Halterung entweder des zu verstellenden Elements oder des Rahmens festhält ; ebenfalls mit abnehmbaren Verbindungen (L) zwischen der Schraube und dem Schneckenrad, und dem jeweils anderen Teil (Element bzw. Rahmen) versehen ; dadurch gekennzeichnet, daß die Haltevorrichtungen (F) ein Langloch (61) o. ä. enthalten, das durch einen mit Schiene (404a) verbundenen Rahmen (62) begrenzt wird ; Langloch (61) nimmt einen Teil des Bügels (426a) auf, und zwar so, daß Rahmen (62) des Langlochs den betreffenden Teil umrahmt und eine Verschiebung des Bügels (426a) parallel zur Antriebswelle (405) verhindert. Auf Bügel (426a) und Schiene (404a) sind zugeordnete Verbindungen (N) für die kraftschlüssige Montage des Bügels (426a) in Langloch (61) vorgesehen, damit sich Bügel (426a) nicht gegenüber Schiene (404a) rechtwinklig zur Mittelebene des Langlochs (61) verschieben kann. Die Vorrichtung ist so ausgelegt, daß die Montage des Bügels in das Langloch auch dann erfolgen kann, wenn die genannte Schraube (412a) noch nicht mit dem anderen Element (403a) verbunden ist, während die Demontage des Bügels (426a) aus dem Langloch (61) unmöglich ist, solange Schraube (412a) mit Element (403a) verbunden ist.

16. Vorrichtung nach Anspruch 15, dadurch gekennzeichnet, daß Langloch (61) den Stutzen (431a) des Bügels (426a) aufnimmt, der koaxial zur Antriebswelle (405) verläuft.

17. Vorrichtung nach Anspruch 15 oder 16, dadurch gekennzeichnet, daß Langloch (61) aus einem mit Schiene (404a) verbundenen Befestigungseisen (63) ausgeschnitten ist.

18. Vorrichtung nach Anspruch 17, dadurch gekennzeichnet, daß Befestigungseisen (63) einen in etwa rechtwinkligen Flächenwinkel bildet, dessen eine Fläche (64) — die Langloch (61) umfaßt — ungefähr parallel zur Antriebswelle und der geometrischen Achse des Rades des Untersetzungsgetriebes verläuft. Die andere Fläche (65) des Winkels steht leicht von der Schiene (404a, 66) ab, ist aber am kantenfernen Rand fest mit ihr verbunden. Die zugeordneten Verbindungen (N, 68) zur Schiene werden an dieser zweiten Winkelfläche (65) befestigt.

19. Vorrichtung nach einem der Ansprüche 15 bis 18, dadurch gekennzeichnet, daß die Verbindung (N) zwischen Bügel (426a) und Schiene (404a) aus einem Schraubkopf (67) und einem Loch (68) besteht, das diesen Schraubkopf aufnimmt.

20. Vorrichtung nach Anspruch 19, dadurch gekennzeichnet, daß Schraubkopf (67) auf Bügel (426a) liegt und ungefähr parallel zur Antriebswelle vorsteht, während sich Loch (68) in Schiene (404a) oder einem mit ihr kraftschlüssigen Element befindet, insbesondere in Fläche (65) des an der Schiene befindlichen Befestigungseisens (63).

21. Vorrichtung nach einem der Ansprüche 15 bis 20, dadurch gekennzeichnet, daß eine u-förmige Umrahmung (69) mit zwei parallelen, planen Flächen (70, 71) für die Enden von Stutzen (430a) des Bügels vorgesehen ist, der das Schneckenrad (409a) aufnimmt. Die Flächen sind mit Aussparungen (72) für Schraube (412a) vorgesehen, die im Schneckenrad greift. Teil (73) der Umrahmung bildet die Verbindung zwischen den Schenkeln des « U » und umfaßt eine Kerbe (74) o. ä., in die ein Schutzrohr (410a) für die Antriebswelle eingelegt werden kann.

22. Vorrichtung nach einem der Ansprüche 15 bis 21, dadurch gekennzeichnet, daß die abnehmbaren Verbindungen (L) zwischen Schraube (412a) (die im Schneckenrad greift) und dem anderen Element (403a) am Ende der Schraube einen Kopf (75) mit Öse (76) oder einer Bohrung und auf der Seite des Elements (403a) eine Achse (77) umfassen, die in diese Öse eingelegt wird.

23. Vorrichtung nach Anspruch 21, dadurch gekennzeichnet, daß Kopf (75) und Öse (76) in Richtung der Achse (77) zwischen einem mit der Achse gekoppelten Widerlager (79) und flexiblen Distanzstücken — insbesondere verformbaren Unterlegscheiben (80) — eingeklemmt wird und auf der dem Widerlager (79) entgegengesetzten Seite anschlagen.

24. Vorrichtung nach einem der Ansprüche 15 bis 23, mit einem Motor mit zwei Wellenausgängen für den Antrieb von je einem Untersetzungsgetriebe an jedem Wellenende, wobei der Motor nicht genau mittig zwischen den Untersetzungsgetrieben liegt. Die Vorrichtung ist dadurch gekennzeichnet, daß das längere Rohr (410b) über einen begrenzten Bereich parallel zur Motorwelle (405) verschoben werden kann. Flexible Distanzstücke (88) halten den nötigen Abstand zwischen Rohr (410b) und Motorgehäuse (6).

25. Vorrichtung nach Anspruch 24, dadurch gekennzeichnet, daß an dem Ende des Motorgehäuses (406), das dem längeren Rohr (410b) am nächsten liegt, eine Muffe (84) vorgesehen ist, die das Rohrende aufnimmt. Auf dem Rohr befindet sich eine Auskehlung (85) für ein an der Muffe befestigtes Metallstück — z. B. eine Schraube (86) —, das bis in die Auskehlung durch die Muffe stößt. Flexible Distanzstücke (88) am Rohr liegen auf einer Seite am Ende der Muffe (84) oder einem mit dem Motorgehäuse (406) verbundenen Anschlag auf, an der anderen Seite auf einem Anschlag, insbesondere einem mit dem Rohr verbundenen Ring (90).

26. Antriebsvorrichtung nach einem der bereits genannten Ansprüche zum Verstellen eines Fahrzeugsitzes (Verschiebung, Längs- oder Höhenverstellung), sowie zur Verstellung der Lehnenneigung dieses Sitzes.

**FIG. 1**

**FIG. 4**

**FIG. 2**

**FIG. 3**

2

FIG. 5

FIG. 6

FIG. 7

FIG. 8

FIG.9

FIG. 10

0 227 694

FIG. 11